# EUROPEAN PATENT APPLICATION

(11) **EP 1 818 905 A1**
(43) Date of publication of application: **15.08.2007**
(21) Application number: 05809431.9
(22) Date of filing: 24.11.2005
(51) Int. Cl.: G09G 5/00, G09G 3/20

(54) **DISPLAY CONTROL DEVICE, DISPLAY DEVICE AND DISPLAY METHOD**

(30) Priority: 30.11.2004 JP 2004347328; 23.03.2005 JP 2005084317; 06.09.2005 JP 2005257334
(71) Applicant: FUJITSU TEN LIMITED, Kobe-shi Hyogo 652-8510 (JP)
(72) Inventor: UETA, Yoshikazu FUJITSU TEN LIMITED, Kobe-shi Hyogo 652-8510 (JP); KAMOTO, Mitsuhiro FUJITSU TEN LIMITED, Kobe-shi Hyogo 652-8510 (JP); FUJIMOTO, Hiroyuki FUJITSU TEN LIMITED, Kobe-shi Hyogo 652-8510 (JP); HASHIMOTO, Yoshiyuki FUJITSU TEN LIMITED, Kobe-shi Hyogo 652-8510 (JP); YOKAWA, Taku FUJITSU TEN LIMITED, Kobe-shi Hyogo 652-8510 (JP); MAEHATA, Minoru FUJITSU TEN LIMITED, Kobe-shi Hyogo 652-8510 (JP); NISHIDA, Kanako FUJITSU TEN LIMITED, Kobe-shi Hyogo 652-8510 (JP)
(74) Representative: Sunderland, James Harry
(86) International application number: PCT/JP2005/021556
(87) International publication number: WO 2006/059528

(57) **Abstract**

A display control device enables to conduct control of automatically switching a display image in a prescribed direction of a plurality of viewing directions to a content or a status desired by a user on a display unit which can display individual images in a plurality of viewing directions on a common screen. The display control device (control unit 2) for controlling a display unit which can display individual images in a plurality of viewing directions on a common screen conducts switching control of a display image in a prescribed direction of a plurality of viewing directions based on a predetermined display switching condition.

## Description

### Technical Field

The present invention relates to a display control device, a display device, and a display method, and more particularly, to a display control device whereby individual images can be displayed in a plurality of viewing directions on a common screen, a display device, and a display method.

### Background Art

In recent years, display devices of a TV and the like have been widely utilized not only for use at home but also for use on vehicle for display outputs of pictures or images to passengers of a vehicle. On-vehicle display devices were originally used for the purpose of route guidance of a user's vehicle, but lately, they have been used not only for route guidance but also for other purposes, for example, as a display unit for an on-vehicle television set disclosed in Patent Document 1, an audio system, a DVD player and the like.

Thus, the range of uses of on-vehicle display devices has been increasing, and in more and more cases, depending on the uses, users to be a target viewer are different. For example, in a case where a display device mounted on a vehicle is used for route guidance, a main user thereof is a driver, but concerning display outputs of TV and the like, a main user thereof is a passenger (non-driver) sitting in a passenger seat or a rear seat.

Here, since display outputs to the driver need be conducted without interfering with the driver's driving operations, it is not preferable that a TV output, a DVD reproduction output and the like be conducted during traveling. The below-mentioned Patent Document 2 discloses an on-vehicle display device whereby viewing from a driver's seat side can be limited by using a liquid crystal shutter.

Furthermore, in recent years, concerning display devices to be mounted on a vehicle, various kinds of techniques have been proposed, whereby a content displayed to a driver and a content displayed to a passenger other than the driver are made different (see the below-mentioned Patent Documents 3 and 4). For example, a technique has been disclosed in the below-mentioned Patent Document 3, wherein as shown in Fig. 30, by arranging masking stripes 302 and 303 on both sides of a transparent cover 301, light emitted from a strip group 304 for displaying an image for driver's seat comes into the eyes of a driver DR, but light emitted from a strip group 305 for displaying an image for passenger seat is prevented from coming into the eyes of the driver DR, while the light emitted from the strip group 305 for displaying the image for passenger seat comes into the eyes of a passenger PA in a passenger seat, but the light emitted from the strip group 304 for displaying the image for driver's seat is prevented from coning into the eyes of the passenger PA in the passenger seat.

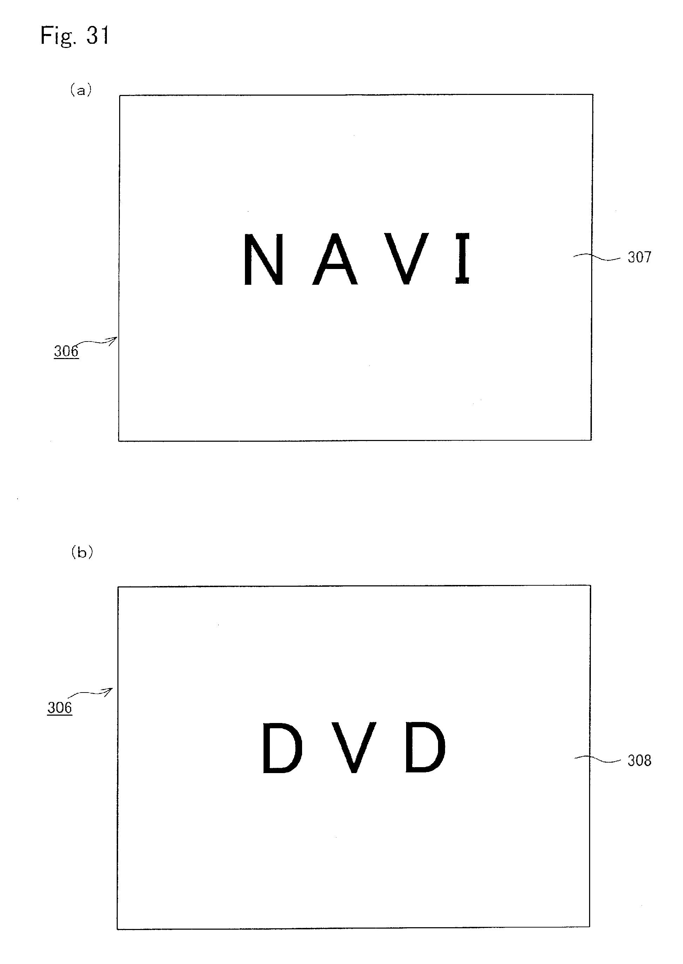

By adopting the above-described technique, as shown in Fig. 31, a map image 307 by a navigation system can be displayed on a display 306 in a manner that can be seen only by the driver DR (cannot be seen by the passenger PA in the passenger seat), while a DVD image 308 can be displayed on the display 306 in a manner that can be seen only by the passenger PA in the passenger seat (cannot be seen by the driver DR). Thus, the passenger PA in the passenger seat can enjoy TV programs or movies even during traveling.

However, by using the display device described in the Patent Document 3, an image 309 which is a mixture of a map image and a DVD image as shown in Fig. 32 is seen from a position between the driver DR and the passenger PA in the passenger seat, for example, seen by a passenger in a rear center seat. To a person sitting between the driver DR and the passenger PA in the passenger seat, the DVD image 308 or the map image 307 cannot be displayed singularly. Therefore, seat positions (directions) from which fine display images can be seen are limited.

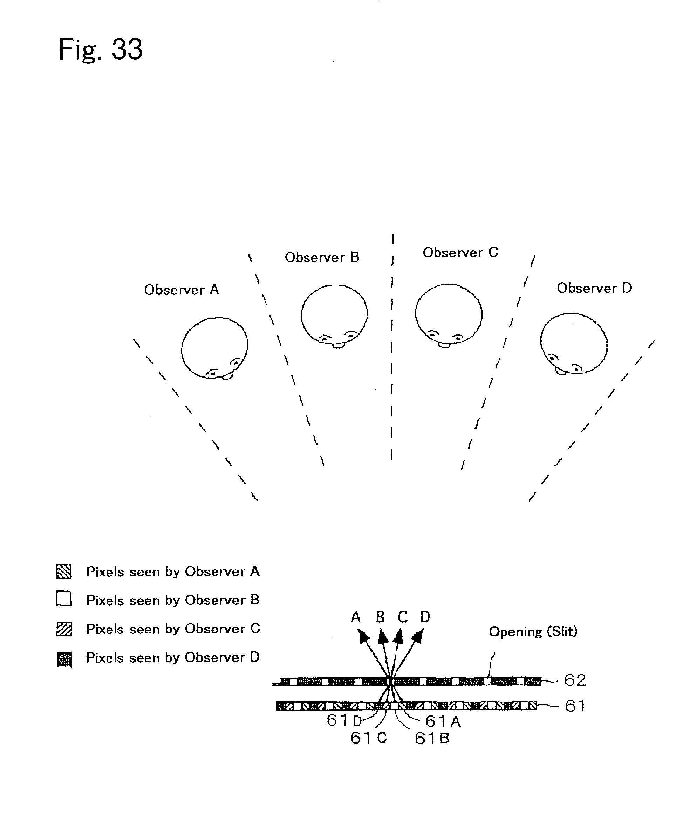

On the other hand, the below-mentioned Patent Document 6 discloses a picture display device, which comprises a liquid crystal display element 311 and a parallax barrier (slit array) 312, wherein when different picture signals are input to each pixel 311A-311D of the liquid crystal display element 311, four observers A-D can watch a flat picture different from one another, as shown in Fig. 33. By applying the construction of such picture display device to the display device described in the Patent Document 3, there is a possibility that the above-described problem, that is, seat positions (directions) from which fine display images can be seen are limited, may be resolved.

On the other hand, when different images can be displayed in a plurality of directions on one screen and seat positions form which different images can be seen increase, switching operations of images displayed in each direction and the like become complicated.

Concerning this point, when the picture display device described in the Patent Document 6 is used, based on a signal from a remote control, a direction in which an observer operating the remote control is present is detected, and only the picture seen by said observer can be selected as a target picture.

However, in the case of using the picture display device described in the Patent Document 6, even when the observers B, C, and D try to see the same picture, the observers B, C, and D each must conduct an operation for selecting the same picture with each remote control. For example, when this type of picture display device is mounted on a vehicle, in order to realize a situation where a map image by a navigation system is displayed to a driver DR while a DVD image is displayed to a passenger PA in a passenger seat and a passenger in a center seat, the passenger PA in the passenger seat and the passenger in the center seat must individually conduct a switching operation to the DVD image, resulting in complicated operations.

By using the display device described in the Patent Document 3, the strip group 304 (one pixel line) on which an image for driver's seat is displayed and the strip group 305 (one pixel line) on which an image for passenger seat is displayed are controlled to be laterally alternate. And by using the picture display device described in the Patent Document 6, each pixel 311A-311D seen by the observers A-D is controlled to be laterally arranged in turn.

When different images are displayed in a plurality of directions on one screen, it is assumed that there are cases where an image which need not be of a high resolution and an image which is preferably of a high resolution are simultaneously displayed. By using the devices described in the Patent Documents 3 and 6, an image displayed in any direction is displayed at the same resolution, and it is impossible to make the display resolution of a particular image higher. As a result, an image is displayed only at a resolution with which a user feels a little dissatisfied. Similarly, by using a dual-view display disclosed in Patent Document 5, display elements on the display are divided into elements for driver's seat side and elements for passenger seat side to conduct display. As a result, the resolution of display for each view is a half of normal resolution. The same problems are caused in display devices for other uses such as for home use.
Patent Document 1: Japanese Patent Application Laid-Open Publication No. 2003-244591
Patent Document 2: Japanese Patent Application Laid-Open Publication No. 2003-15535
Patent Document 3: Japanese Patent Application Laid-Open Publication No. 2003-137005
Patent Document 4: Japanese Patent Application Laid-Open Publication No. 2000-13744
Patent Document 5: Japanese Patent Application Laid-Open Publication No. 2004-206089
Patent Document 6: Japanese Patent Publication No. 3503925

### Disclosure of Invention

The present invention was developed in order to solve the above problems, and it is an object of the present invention to provide a display control device which can conduct control of automatically switching a display image in a prescribed direction of a plurality of viewing directions to a content or a status desired by a user on a display unit which can display individual images in the plurality of viewing directions on a common screen, and which can conduct control of improving visibility of any image of individual images on a display unit which can display the individual images in a plurality of viewing directions on a common screen, and a display device, and moreover, a display device which can conduct different display outputs in a plurality of directions without reducing resolutions, and a display method.

In order to achieve the above object, a display control device according to a first aspect of the present invention is characterized by being a display control device for controlling a display unit which can display individual images in a plurality of viewing directions on a common screen, comprising a display control unit for conducting switching control of a display image in a prescribed direction of the plurality of viewing directions based on a predetermined display switching condition.

When the display control device according to the first aspect of the present invention is used, the display image in the prescribed direction is switched based on the display switching condition. Therefore, by previously setting a display switching condition desired by a user, the display image in the prescribed direction can be switched to a status desired by the user, and it is possible to realize control for saving the trouble of conducting switching operations of the display image in the prescribed direction and for improving visibility of each display image displayed in different directions.

A display control device according to a second aspect of the present invention is characterized by comprising a switched direction judging unit for judging in which direction of the plurality of viewing directions a display image was switched, and a switching condition judging unit for judging whether the display switching condition is related to the switched direction judged by the switched direction judging unit or not, wherein the display control unit conducts control of switching the display image in the prescribed direction to the same display image as the display image in the switched direction when it is judged that the display switching condition is related to the switched direction by the switching condition judging unit in the display control device according to the first aspect of the present invention.

When the display control device according to the second aspect of the present invention is used, the control of switching the display image in the prescribed direction to the same display image as the display image in the switched direction is conducted when it is judged that the display switching condition is related to the switched direction. Therefore, it is possible to display the same display image in the prescribed direction as that in the switched direction at all times. As a result, concerning the prescribed direction, it is possible to save the user the trouble of conducting switching operations.

A display control device according to a third aspect of the present invention is characterized by the display unit which comprises a separate display unit for displaying different images each in a first direction, in a second direction, and in a third direction on one screen, and the display control unit which conducts switching control of display images in the second direction and/or in the third direction based on the display switching condition in the display control device according to the first aspect of the present invention.

When the display control device according to the third aspect of the present invention is used, the display unit comprises a separate display unit for displaying different images each in a first direction (e.g. a direction in which a driver is present), in a second direction (e.g. a direction in which a passenger in a passenger seat is present), and in a third direction (e.g. a direction in which a passenger in a center seat is present) on one screen. And since the switching control of display images in the second direction and/or in the third direction is conducted by the display control unit based on the display switching condition, the display images in the second direction and/or in the third direction can be switched to a status desired by the user, and it is possible to realize control for saving the trouble of conducting switching operations of display images in the second direction and/or in the third direction and for improving visibility of each display image displayed in different directions.

A display control device according to a fourth aspect of the present invention is characterized by the display switching condition which is to switch display images in the second direction and/or in the third direction to the same image as a display image in the first direction in the display control device according to the third aspect of the present invention.

When the display control device according to the fourth aspect of the present invention is used, the display switching condition is to switch display images in the second direction and/or in the third direction to the same image as a display image in the first direction. Therefore, when the display image in the first direction (e.g. a direction in which a driver is present) is switched, in synchronization with the switching of the display image in the first direction, the display image in the third direction (e.g. a direction in which a passenger in a center seat is present) is also switched. As a result, a person present in the third direction can enjoy the same image as a person present in the first direction at all times without conducting a switching operation.

A display control device according to a fifth aspect of the present invention is characterized by the display switching condition which is to switch a display image in the third direction to the same image as a display image in the second direction in the display control device according to the third aspect of the present invention.

When the display control device according to the fifth aspect of the present invention is used, the display switching condition is to switch a display image in the third direction to the same image as a display image in the second direction. Therefore, when the display image in the second direction (e.g. a direction in which a passenger in a passenger seat is present) is switched, in synchronization with the switching of the display image in the second direction, the display image in the third direction (e.g. a direction in which a passenger in a center seat is present) is also switched. As a result, a person present in the third direction can enjoy the same image as a person present in the second direction at all times without conducting a switching operation.

A display control device according to a sixth aspect of the present invention is characterized by the display switching condition which is to output no display image in the second direction and/or in the third direction in the display control device according to the third aspect of the present invention.

When the display control device according to the sixth aspect of the present invention is used, the display switching condition is to output no display image in the second direction and/or in the third direction. Therefore, for example, when the condition is to output no display image in the third direction (e.g. a direction in which a passenger in a center seat is present), it is possible to reduce the influence that a display image in the first direction (e.g. a direction in which a driver is present) and a display image in the second direction (e.g. a direction in which a passenger in a passenger seat is present) are mixed in such a manner as to be awkward to see (the influence of crosstalk), it is possible to allow a person present in the first direction and a person present in the second direction to see clearer images, and it is possible to enhance visibility in the case of displaying different images in two directions. Moreover, when the condition is to output no display image in the second direction (e.g. a direction in which a passenger in a passenger seat is present), it is possible to prevent a situation where a display image in the second direction is reflected by a window during the nighttime or the like so as to blind a driver.

A display control device according to a seventh aspect of the present invention is characterized by the display switching condition which is to display an image selected for the third direction as a display image in the third direction in the display control device according to the third aspect of the present invention.

When the display control device according to the seventh aspect of the present invention is used, the display switching condition is to display an image selected for the third direction as a display image in the third direction. Therefore, a person present in the third direction can enjoy the image for the third direction at all times even when a display image in the first or second direction was switched.

A display control device according to an eighth aspect of the present invention is characterized by comprising a display switching condition setting unit for setting the display switching condition in the display control device according to the first aspect of the present invention.

Since the display control device according to the eighth aspect of the present invention comprises the display switching condition setting unit for setting the display switching condition, the display switching condition can be appropriately set depending on the situation and the like, and it is possible to switch a display image in the prescribed direction to a status desired by a user.

A display device according to a first aspect of the present invention is characterized by comprising a display unit which can display individual images in a plurality of viewing directions on a common screen, and a display control unit for controlling the display unit, wherein the display control unit conducts switching control of a display image in a prescribed direction of the plurality of viewing directions based on a predetermined display switching condition.

When the display device according to the first aspect of the present invention is used, it is possible to implement the same control as that conducted by the display control device according to the first aspect of the present invention on the display unit which can display individual images in a plurality of viewing directions on a common screen, and the display device is allowed to have the same effect as the display control device according to the first aspect of the present invention.

A display control device according to an ninth aspect of the present invention is characterized by being a display control device for controlling a display unit which can display individual images in a plurality of viewing directions on a common screen, wherein the display unit comprises a light transmission area changing unit for changing a light transmission area in each viewing direction, the display control device comprising a display control unit which brings a change of a light transmission area in each viewing direction by the light transmission area changing unit into correspondence with a display resolution of an image displayed in the each viewing direction for control.

When the display control device according to the ninth aspect of the present invention is used, display control is conducted by bringing a change of a light transmission area in each viewing direction by the light transmission area changing unit into correspondence with a display resolution of an image displayed in the each viewing direction. Therefore, for example, it is possible to conduct control of adjusting a display resolution of an image displayed in each viewing direction for display responding to a change of a light transmission area in the each viewing direction by the light transmission area changing unit, and it is possible to display an image of an increased display resolution in accordance with a change of a visible region of the image, resulting in an improvement in visibility of the image. Or it is possible to conduct control of changing a light transmission area in each viewing direction by the light transmission area changing unit for display in accordance with a change of a display resolution of an image displayed in the each viewing direction, and it is possible to make a visible region of each image wider or narrower in accordance with a change of the display resolution of the image, resulting in an improvement in visibility of a prescribed image.

A display control device according to a tenth aspect of the present invention is characterized by comprising an image number detecting unit for detecting a change in number of images displayed on the display unit, wherein the display control unit brings a change of the light transmission area in the each viewing direction by the light transmission area changing unit into correspondence with the display resolution of the image displayed in the each viewing direction for control based on the number of images detected by the image number detecting unit in the display control device according to the ninth aspect of the present invention.

When the display control device according to the tenth aspect of the present invention is used, display control is conducted by bringing a change of the light transmission area in the each viewing direction by the light transmission area changing unit into correspondence with the display resolution of the image displayed in the each viewing direction based on the number of images detected by the image number detecting unit. Therefore, in accordance with the number of images displayed on the display unit, the light transmission area in the each viewing direction can be changed. For example, when the number of images displayed on the display unit is one, the view area is made one, that is, the light transmission area is changed by the light transmission area changing unit in such a manner that separate display is not conducted. When the number of images displayed on the display unit is two, the light transmission area is changed by the light transmission area changing unit in such a manner as to divide the view area into two. Furthermore, when the number of images displayed on the display unit is three or more, the light transmission area can be changed by the light transmission area changing unit in such a manner as to divide the view area into three or more. Since control of adjusting the display resolutions of display images is conducted in accordance with a change of the light transmission area by the light transmission area changing unit, the smaller the number of images displayed on the display unit becomes, the higher the display resolutions of said images can be made, resulting in an improvement in visibility.

A display control device according to an eleventh aspect of the present invention is characterized by comprising an image type determining unit for determining types of images displayed on the display unit, wherein the display control unit brings a change of the light transmission area in the each viewing direction by the light transmission area changing unit into correspondence with the display resolution of the image displayed in the each viewing direction for control based on the types of images determined by the image type determining unit in the display control device according to the ninth aspect of the present invention.

When the display control device according to the eleventh aspect of the present invention is used, control can be conducted by bringing a change of the light transmission area in the each viewing direction into correspondence with the display resolution of the image displayed in the each viewing direction depending on the types of images displayed on the display unit. For example, change patterns of the light transmission area corresponding to the types of images (image sources) are previously stored, the type of each image is determined, and control of changing the light transmission area according to the determined type of each image (e.g. control of extending the visible region of a previously selected high priority image) can be realized. In addition, since the display resolution of the image is also adjusted in accordance with a change of the light transmission area, for example, it is possible to increase the display resolution of an image whose light transmission area was extended, resulting in an improvement in visibility of the image.

A display control device according to a twelfth aspect of the present invention is characterized by comprising a visible region changing operation detecting unit for detecting a changing operation of a visible region of any image displayed on the display unit, wherein the display control unit brings a change of the light transmission area in the each viewing direction by the light transmission area changing unit into correspondence with the display resolution of the image displayed in the each viewing direction for control based on the changing operation of the visible region detected by the visible region changing operation detecting unit in the display control device according to the ninth aspect of the present invention.

When the display control device according to the twelfth aspect of the present invention is used, control can be conducted by bringing a change of the light transmission area in the each viewing direction into correspondence with the display resolution of the image displayed in the each viewing direction based on the changing operation of the visible region of any image displayed on the display unit. For example, change patterns of the light transmission area when a changing operation of the visible region is detected are previously stored, and control of changing the light transmission area according to the changing operation of the visible region (e.g. control of extending the visible region of an image of which a changing operation of the visible region was detected) can be realized. In addition, since the display resolution of the image is also adjusted in accordance with the change of the light transmission area, for example, it is possible to increase the display resolution of an image whose visible region was extended, resulting in an improvement in visibility of the image.

A display control device according to a thirteenth aspect of the present invention is characterized by comprising an operation detecting unit for detecting an operation to any image displayed on the display unit, wherein the display control unit brings a change of the light transmission area in the each viewing direction by the light transmission area changing unit into correspondence with the display resolution of the image displayed in the each viewing direction for control based on the operation detected by the operation detecting unit in the display control device according to the ninth aspect of the present invention.

When the display control device according to the thirteenth aspect of the present invention is used, control can be conducted by bringing a change of the light transmission area in the each viewing direction by the light transmission area changing unit into correspondence with the display resolution of the image displayed in the each viewing direction according to an operation to any image displayed on the display unit. For example, change patterns of the light transmission area when an operation to an image is detected are previously stored, and control of changing the light transmission area according to the operation to the image (e.g. control of extending the visible region of an image to which some operation was detected) can be realized. In addition, since the display resolution of the image is also adjusted in accordance with the change of the light transmission area by the light transmission area changing unit, for example, it is possible to extend the visible region of the image to which the operation was detected and increase the display resolution thereof, resulting in improvements in visibility and operability.

A display control device according to a fourteenth aspect of the present invention is characterized by the light transmission area changing unit which comprises a liquid crystal shutter, the display control device comprising a shielding pattern storage unit in which shielding patterns of the liquid crystal shutter are stored, wherein the display control unit reads a shielding pattern corresponding to a changing condition of the light transmission area from the shielding pattern storage unit and controls the liquid crystal shutter based on the shielding pattern in the display control device according to the ninth aspect of the present invention.

When the display control device according to the fourteenth aspect of the present invention is used, the display control device reads a shielding pattern corresponding to a changing condition of the light transmission area from the shielding pattern storage unit and controls the liquid crystal shutter based on the shielding pattern. Therefore, by controlling the liquid crystal shutter, it is possible to freely change the light transmission area related to each image into a prescribed pattern, resulting in realization of varied image display.

A display device according to a second aspect of the present invention is characterized by comprising a display unit which can display individual images in a plurality of viewing directions on a common screen, the display unit having a light transmission area changing unit for changing a light transmission area in each viewing direction, and a display control unit which brings a change of a light transmission area in each viewing direction by the light transmission area changing unit into correspondence with a display resolution of an image displayed in the each viewing direction for control.

When the display device according to the second aspect of the present invention is used, it is possible to realize the same control as the display control device according to the ninth aspect of the present invention on a display unit which can display individual images in a plurality of viewing directions on a common screen, having a light transmission area changing unit for changing a light transmission area in each viewing direction, and the display device is allowed to have the same effect as the display control device according to the ninth aspect of the present invention.

A display device according to a third aspect of the present invention is characterized by comprising a first display content preparing unit for preparing a display content in a first direction, a second display content preparing unit for preparing a display content in a second direction, a directivity control unit for controlling directivities of display outputs, and a time-division linkage control unit which switches between a first display content prepared by the first display content preparing unit and a second display content prepared by the second display content preparing unit by time division to output to each display element, and links switching timing between the display contents with switching timing of directivity by the directivity control unit.

When the display device according to the third aspect of the present invention is used, a display content in a first direction is prepared by the first display content preparing unit while a display content in a second direction is prepared by the second display content preparing unit. And by the time-division linkage control unit, the first display content and the second display content are switched to each other by time division to be output to each display element, and control of linking the switching timing between the display contents with the switching timing of directivity by the directivity control unit is conducted. Therefore, a display device which conducts different display outputs in a plurality of directions without reducing resolutions can be obtained.

A display device according to a fourth aspect of the present invention is characterized by the time-division linkage control unit which switches between the first display content and the second display content by time division in all display elements for output in the display device according to the third aspect of the present invention.

When the display device according to the fourth aspect of the present invention is used, the first display content and the second display content are switched to each other by time division in all display elements to be output by the time-division linkage control unit. Therefore, by linking the switching timing between the display contents with the switching timing of directivity by the directivity control unit, a display device which conducts different display outputs in a plurality of directions without reducing resolutions can be obtained.

A display device according to a fifth aspect of the present invention is characterized by the time-division linkage control unit which variably controls a switching density between the first display content and the second display content in the display device according to the fourth aspect of the present invention.

When the display device according to the fifth aspect of the present invention is used, the switching density between the first display content and the second display content is variably controlled when the first display content and the second display content are switched to each other by time division with linking to the switching timing of directivity by the directivity control unit. Therefore, a display device which conducts different display outputs in a plurality of directions without reducing resolutions and enables to conduct picture quality adjustment in each direction can be obtained.

A display device according to a sixth aspect of the present invention is characterized by being a display device mounted on a vehicle, further comprising a running state acquisition unit for acquiring a running state of the vehicle, wherein the time-division linkage control unit changes the switching density based on the running state of the vehicle in the display device according to the fifth aspect of the present invention.

By using the display device according to the sixth aspect of the present invention, the switching density between the first display content and the second display content is variably controlled based on the running state of the vehicle, when the first display content and the second display content are switched to each other by time division with linking to the switching timing of directivity by the directivity control unit. Therefore, a display device which conducts different display outputs in a plurality of directions without reducing resolutions and conducts picture quality adjustment according to the running state can be obtained.

A display device according to a seventh aspect of the present invention is characterized by the time-division linkage control unit which increases the switching density to the second direction when the vehicle is running in the display device according to the sixth aspect of the present invention.

By using the display device according to the seventh aspect of the present invention, for example, when a display content to a driver's seat and a display content to a passenger seat are switched to each other by time division with linking to the switching timing of directivity by the directivity control unit, the switching density to the passenger seat direction (the second direction) is increased if the vehicle is running. Therefore, a display device which conducts different display outputs in a plurality of directions without reducing resolutions and gives priority to the quality of picture in the passenger seat direction (the second direction) during running can be obtained.

A display device according to an eighth aspect of the present invention is characterized by the time-division linkage control unit which increases the switching density to the first direction when guidance to a driver is being conducted in the display device according to the sixth aspect of the present invention.

By using the display device according to the eighth aspect of the present invention, for example, when a display content to a driver's seat and a display content to a passenger seat are switched to each other by time division with linking to the switching timing of directivity by the directivity control unit, the switching density to the driver's seat direction (the first direction) is increased if guidance to the driver is being conducted. Therefore, a display device which conducts different display outputs in a plurality of directions without reducing resolutions and gives priority to the quality of picture in the driver's seat direction (the first direction) can be obtained.

A display device according to a ninth aspect of the present invention is characterized by further comprising a luminance correcting unit for correcting luminances of display outputs based on the switching density between the first display content and the second display content in the display device according to the fifth aspect of the present invention.

By using the display device according to the ninth aspect of the present invention, when the first display content and the second display content are switched to each other by time division with linking to the switching timing of directivity by the directivity control unit, the luminances of the display outputs are corrected based on the switching density between the first display content and the second display content. Therefore, a display device which outputs different display contents with appropriate luminances in a plurality of directions without reducing resolutions can be obtained.

A display device according to a tenth aspect of the present invention is characterized by the time-division linkage control unit which switches between output patterns including the first display content and the second display content by time division for output, and links switching timing between the output patterns with the switching timing of directivity by the directivity control unit in the display device according to the third aspect of the present invention.

When the display device according to the tenth aspect of the present invention is used, the time-division linkage control unit switches between output patterns including the first display content and the second display content by time division for output, and links the switching timing between the output patterns with the switching timing of directivity by the directivity control unit. Therefore, even if the first display content and the second display content are simultaneously output in the output patterns, by linking the switching timing between the output patterns with the switching timing of directivity by the directivity control unit, the first display content and the second display content are temporally mixed with each other, and it is possible to obtain picture display whose resolution is not reduced. By taking advantage of an after image phenomenon, a display device which conducts different display outputs in a plurality of directions without reducing resolutions can be obtained.

A display device according to an eleventh aspect of the present invention is characterized by the directivity control unit which is a liquid crystal shutter to interrupt transmission of light in a particular direction in the display device according to the third aspect of the present invention.

When the display device according to the eleventh aspect of the present invention is used, a display content in the first direction is prepared by the first display content preparing unit while a display content in the second direction is prepared by the second display content preparing unit. And by the time-division linkage control unit, the first display content and the second display content are switched to each other by time division for output, and the switching timing between the display contents and the switching timing of directivity by the liquid crystal shutter are linked together. As a result, a display device of a simple construction which conducts different display outputs in a plurality of directions without reducing resolutions can be obtained.

A display device according to a twelfth aspect of the present invention is characterized by the time-division linkage control unit which sets a full-interrupting time period during which both transmission in the first direction and transmission in the second direction are interrupted at a point in time when the directivity is switched by the directivity control unit, and before and after the point in time in the display device according to the third aspect of the present invention.

When the display device according to the twelfth aspect of the present invention is used, the directivity control unit is controlled in such a manner as to set a full-interrupting time period during which transmission in the first direction and transmission in the second direction are interrupted at a point in time when the first display content and the second display content to each display element are switched, and before and after the point in time. Therefore, a display device which conducts different display outputs in a plurality of directions without reducing resolutions and without an occurrence of time crosstalk can be obtained.

A display device according to a thirteenth aspect of the present invention is characterized by the time-division linkage control unit which completely opens the liquid crystal shutter at all times when the first display content and the second display content are identical in the display device according to the eleventh aspect of the present invention.

By using the display device according to the thirteenth aspect of the present invention, when the first display content and the second display content are identical, display outputs are conducted by controlling the liquid crystal shutter so as to be completely open at all times. As a result, a display device which conducts different display outputs in a plurality of directions without reducing resolutions as needed can be obtained.

A display device according to a fourteenth aspect of the present invention is characterized by the time-division linkage control unit which controls the liquid crystal shutter to be in a grid-like shielding pattern in the display device according to the eleventh aspect of the present invention.

When the display device according to the fourteenth aspect of the present invention is used, the liquid crystal shutter is controlled to be in a grid-like shielding pattern by the time-division linkage control unit. As a result, it is possible to further improve the quality of picture when different display outputs are conducted in a plurality of directions without reducing resolutions.

A display device according to a fifteenth aspect of the present invention is characterized by the time-division linkage control unit which outputs a common content in a common region of a display screen when display contents prepared by the first display content preparing unit and the second display content preparing unit contain the common content in the display device according to the third aspect of the present invention.

By using the display device according to the fifteenth aspect of the present invention, when the first display content and the second display content contain a common content, the common content is output in a common region of a display screen. As a result, a display device which conducts different display outputs in a plurality of directions without reducing resolutions and outputs a common content of higher quality can be obtained.

A display device according to a sixteenth aspect of the present invention is characterized by the time-division linkage control unit which controls a portion of the liquid crystal shutter corresponding to a region in which the common content is displayed so as to be completely open at all times in the display device according to the fifteenth aspect of the present invention.

By using the display device according to the sixteenth aspect of the present invention, when the first display content and the second display content contain a common content, the common content is displayed in a common region of a display screen, and the portion of the liquid crystal shutter corresponding thereto is controlled to be completely open at all times. As a result, a display device which conducts different display outputs in a plurality of directions without reducing resolutions and outputs a common content of higher quality can be obtained.

A display device according to a seventeenth aspect of the present invention is characterized by being a display device mounted on a vehicle, wherein the first direction is a driver's seat direction and the second direction is a passenger seat direction in the display device according to the third aspect of the present invention.

When the display device according to the seventeenth aspect of the present invention is used, a display content in the driver's seat direction is prepared by the first display content preparing unit while a display content in the passenger seat direction is prepared by the second display content preparing unit. And by the time-division linkage control unit, the display content in the driver's seat direction and the display content in the passenger seat direction are switched to each other by time division for output, and the switching timing between the display contents and the switching timing of directivity by the directivity control unit are linked together. As a result, a display device which conducts different display outputs toward the driver's seat and toward the passenger seat without reducing resolutions can be obtained.

A display device according to an eighteenth aspect of the present invention is characterized by the time-division linkage control unit which selectively displays the first display content when no passenger is sitting in the passenger seat, and stops directivity control by the directivity control unit in the display device according to the seventeenth aspect of the present invention.

By using the display device according to the eighteenth aspect of the present invention, when no passenger is sitting in the passenger seat, a display content in the driver's seat direction is always displayed, and the directivity control by the directivity control unit is stopped. As a result, a display device which conducts different display outputs in a plurality of directions without reducing resolutions as needed can be obtained.

A display device according to a nineteenth aspect of the present invention is characterized by the first display content preparing unit and the second display content preparing unit which prepare display contents at a bit rate corresponding to time-division outputs in the display device according to the third aspect of the present invention.

By using the display device according to the nineteenth aspect of the present invention, when by the time-division linkage control unit, the first display content and the second display content are switched to each other by time division with linking to the switching timing of directivity by the directivity control unit, the first display content and the second display content are prepared at a bit rate corresponding to the time-division outputs. As a result, a display device which conducts different display outputs in a plurality of directions without reducing resolutions at an appropriate bit rate can be obtained.

A display device according to a twentieth aspect of the present invention is characterized by comprising a first composite picture producing unit for producing a first composite picture from a first specific pixel group on a first picture with a second exclusive pixel group in an exclusive position from the first specific pixel group on a second picture, a second composite picture producing unit for producing a second composite picture from a second specific pixel group in the same position as the first specific pixel group on the second picture with a first exclusive pixel group in an exclusive position from the second specific pixel group on the first picture, a directivity control unit for switching control between a directivity of each pixel located in the first specific pixel group and a directivity of each pixel located in the second specific pixel group, and a time-division linkage control unit which switches between the first composite picture and the second composite picture by time division for display, and links switching timing between the directivities by the directivity control unit to the switching.

When the display device according to the twentieth aspect of the present invention is used, the time-division linkage unit switches between the first composite picture and the second composite picture by time division for display, and links the switching timing between the directivities by the directivity control unit to the switching. Therefore, even if the first specific pixel group on the first picture and the second exclusive pixel group on the second picture are simultaneously output on the first composite picture, and the second specific pixel group on the second picture and the first exclusive pixel group on the first picture are simultaneously output on the second composite picture, by linking the switching timing between the first composite picture and the second composite picture with the switching timing between the directivities by the directivity control unit, the first composite picture and the second composite picture are temporally mixed with each other and picture display without reducing resolutions of the first picture and the second picture can be obtained. By taking advantage of an after image phenomenon, a display device which conducts different display outputs in a plurality of directions without reducing resolutions can be obtained.

A display method according to a first aspect of the present invention is characterized by comprising a step of time-division display wherein a plurality of pictures are displayed by time division on each display element, and a step of time-division interruption wherein directivities are added to display outputs by time-division interruption of an emission of picture light in a prescribed direction with linking to the time-division display, and the plurality of pictures are output in different directions.

When the display method according to the first aspect of the present invention is used, a plurality of pictures are displayed by time division on each display element, and directivities are added to display outputs by interrupting by time division an emission of picture light in a prescribed direction with linking to the time-division display, and the plurality of pictures are output in different directions. As a result, a display method wherein different display outputs are conducted in a plurality of directions without reducing resolutions can be obtained.

A display method according to a second aspect of the present invention is characterized by the step of time-division display wherein a plurality of pictures are displayed by time division in all display elements in the display method according to the first aspect of the present invention.

When the display method according to the second aspect of the present invention is used, a plurality of pictures are displayed by time division in all display elements, and directivities are added to display outputs by interrupting by time division an emission of picture light in a prescribed direction with linking to the time-division display, and the plurality of pictures are output in different directions in all display elements. As a result, a display method wherein different display outputs are conducted in a plurality of directions without reducing resolutions can be obtained.

A display method according to a third aspect of the present invention is characterized by the step of time-division display wherein a switching density between the plurality of pictures is variably controlled in the display method according to the second aspect of the present invention.

When the display method according to the third aspect of the present invention is used, the switching density between the plurality of pictures is variably controlled. As a result, a display method wherein different display outputs are conducted in a plurality of directions without reducing resolutions and picture quality adjustment can be conducted in each direction can be obtained.

A display method according to a fourth aspect of the present invention is characterized by further comprising a step of luminance correction wherein luminances of display outputs are corrected based on the switching density between the plurality of pictures in the display method according to the third aspect of the present invention.

When the display method according to the fourth aspect of the present invention is used, the switching density between the plurality of pictures is variably controlled, and the luminances of display outputs are corrected based on the switching density. As a result, a display method wherein different display outputs with appropriate luminances are conducted in a plurality of directions without reducing resolutions can be obtained.

A display method according to a fifth aspect of the present invention is characterized by the step of time-division display wherein output patterns including a plurality of pictures are switched by time division for display in the display method according to the first aspect of the present invention.

When the display method according to the fifth aspect of the present invention is used, the output patterns including a plurality of pictures are switched by time division for display, and directivities are added to display outputs by interrupting by time division an emission of picture light in a prescribed direction with linking to the time-division display, so as to output the plurality of pictures in different directions. Therefore, even if a plurality of pictures are simultaneously output in the output patterns, by linking the switching between the output patterns with the addition of directivities through the step of time-division interruption, the plurality of pictures are temporally mixed with each other and picture display without reducing resolutions can be obtained. By taking advantage of an after image phenomenon, a display method wherein different display outputs are conducted in a plurality of directions without reducing resolutions can be obtained.

A display method according to a sixth aspect of the present invention is characterized by the step of time-division interruption wherein a full-interrupting time period during which emissions in all directions are interrupted at a point in time when an output picture is switched in the step of time-division display, and before and after the point in time is set in the display method according to the first aspect of the present invention.

When the display method according to the sixth aspect of the present invention is used, a full-interrupting time period during which emissions in all directions are interrupted at a point in time when an output picture is switched, and before and after the point in time is set to conduct time-division interruption. As a result, a display method wherein different display outputs are conducted in a plurality of directions without reducing resolutions and without an occurrence of time crosstalk can be obtained.

A display method according to a seventh aspect of the present invention is characterized by the step of time-division interruption wherein emissions in all directions are transmitted when display contents of the plurality of pictures are identical in the display method according to the first aspect of the present invention.

When the display method according to the seventh aspect of the present invention is used, emissions in all directions are transmitted when the display contents of the plurality of pictures are identical. As a result, a display method wherein different display outputs are conducted in a plurality of directions without reducing resolutions as needed can be obtained.

A display method according to an eighth aspect of the present invention is characterized by the step of time-division interruption wherein all emissions of picture light forming a common portion of the display contents of the plurality of pictures are transmitted when the common portion is present in the display method according to the first aspect of the present invention.

By using the display method according to the eighth aspect of the present invention, when a common portion of the display contents of the plurality of pictures is present, all emissions of picture light forming the common portion are transmitted. As a result, a display method wherein different display outputs are conducted in a plurality of directions without reducing resolutions and the common content is output at a higher quality can be obtained.

A display method according to a ninth aspect of the present invention is characterized by the plurality of pictures which have display contents at a bit rate corresponding to time-division outputs in the display method according to the first aspect of the present invention.

When the display method according to the ninth aspect of the present invention is used, the display contents at a bit rate corresponding to time-division outputs are output. As a result, a display method wherein different display outputs are conducted in a plurality of directions without reducing resolutions at an appropriate bit rate can be obtained.

A display method according to a tenth aspect of the present invention is characterized by comprising a step of producing a first composite picture wherein a first composite picture is produced from a first specific pixel group on a first picture with a second exclusive pixel group in an exclusive position from the first specific pixel group on a second picture, a step of producing a second composite picture wherein a second composite picture is produced from a second specific pixel group in the same position as the first specific pixel group on the second picture with a first exclusive pixel group in an exclusive position from the second specific pixel group on the first picture, and a step of time-division switching wherein the first composite picture and the second composite picture are switched by time division to be displayed, and a directivity of each pixel located in the first specific pixel group and a directivity of each pixel located in the second specific pixel group in display outputs are switched with linking to the switching.

When the display device according to the tenth aspect of the present invention is used, the first composite picture and the second composite picture are switched by time division to be displayed, and the directivity of each pixel located in the first specific pixel group and the directivity of each pixel located in the second specific pixel group in display outputs are switched with linking to the switching. Therefore, even if the first specific pixel group on the first picture and the second exclusive pixel group on the second picture are simultaneously output on the first composite picture, and the second specific pixel group on the second picture and the first exclusive pixel group on the first picture are simultaneously output on the second composite picture, by linking the switching timing between the first composite picture and the second composite picture with the switching timing between the directivities by the directivity control unit, the first composite picture and the second composite picture are temporally mixed with each other and picture display without reducing resolutions of the first composite picture and the second composite picture can be obtained. By taking advantage of an after image phenomenon, a display method wherein different display outputs are conducted in a plurality of directions without reducing resolutions can be obtained.

### Brief Description of Drawings

Fig. 1 is a conceptual illustration to describe a function that a display device according to the present invention has;

Fig. 2 is a perspective view showing a situation where the display device according to the present invention is mounted on a vehicle;

Fig. 3(a) is a diagram schematically showing a display status of a display unit of the display device according to the present invention when viewed from the front, and Fig. 3(b) is a sectional view taken along the line B-B of Fig. 3(a);

Fig. 4 is a circuit diagram showing a schematic construction of a TFT substrate constituting the display unit;

Fig. 5 is a block diagram schematically showing the principal part of an AV navigation system comprising the display device according to the present invention;

Fig. 6 is a block diagram showing a schematic construction of a picture output unit;

Fig. 7 is a block diagram showing a schematic construction of a memory;

Fig. 8 is a block diagram showing a schematic construction of a control unit;

Fig. 9 is a block diagram schematically showing the principal part of an AV navigation system comprising a display device wherein a display control device according to a first embodiment of the present invention is adopted;

Fig. 10 is an illustration schematically showing a construction of a liquid crystal panel and a separate display shutter constituting the display device;

Fig. 11 is a flowchart showing a processing operation performed by a control unit in the display device wherein the display control device according to the first embodiment is adopted;

Fig. 12 is a flowchart showing another processing operation performed by the control unit in the display device wherein the display control device according to the first embodiment is adopted;

Fig. 13 is a block diagram schematically showing the principal part of an AV navigation system comprising a display device wherein a display control device according to a second embodiment is adopted;

Fig. 14 is a sectional view schematically showing a construction of a liquid crystal panel and a liquid crystal shutter constituting the display device;

Fig. 15 is an illustration showing a simplified construction of the liquid crystal panel and the liquid crystal shutter shown in Fig. 14;

Figs. 16(a)-16(c) are illustrations to describe drive control of the liquid crystal shutter and image output control to the liquid crystal panel performed by the control unit, which are conducted according to the number of images displayed on the liquid crystal panel;

Figs. 17(a)-17(c) are illustrations to describe drive control of the liquid crystal shutter and image output control to the liquid crystal panel performed by the control unit, which are conducted according to the types of images displayed on the liquid crystal panel;

Figs. 18(a) and 18(b) are illustrations to describe drive control of the liquid crystal shutter and image output control to the liquid crystal panel performed by the control unit, which are conducted when a changing operation of a visible region was conducted by a user, or when an operation to a display image was conducted;

Fig. 19 is a flowchart showing a processing operation performed by the control unit in the display device wherein the display control device according to the second embodiment is adopted;

Fig. 20 is a flowchart showing another processing operation performed by the control unit in the display device wherein the display control device according to the second embodiment is adopted;

Fig. 21 is a flowchart showing still another processing operation performed by the control unit in the display device wherein the display control device according to the second embodiment is adopted;

Fig. 22 is a block diagram showing an overview construction of an on-vehicle device wherein a display device according to a third embodiment is adopted;

Fig. 23-1 is an illustration to describe a method wherein a screen for a driver and a screen for a non-driver are displayed by dividing a display;

Fig. 23-2 is an illustration to describe a method wherein a screen for the driver and a screen for the non-driver are displayed in overlying relation with each other;

Fig. 24 is an illustration to describe display outputs by time-division linkage control;

Fig. 25 is an illustration to describe an operation of a liquid crystal shutter in the time-division linkage control;

Fig. 26 is an illustration to describe a case where a display content of a display output for driver and a display content of a display output for non-driver contain a common content;

Fig. 27 is an illustration to describe an operation of the liquid crystal shutter in a case where a display content of a display output for driver and a display content of a display output for non-driver contain a common content;

Figs. 28(a) and 28(b) are illustrations to describe a display method by time-division linkage control performed by a main control unit in an on-vehicle device according to a fourth embodiment;

Figs. 29(a) and 29(b) are illustrations to describe shielding patterns of a liquid crystal shutter in an on-vehicle device according to another embodiment;

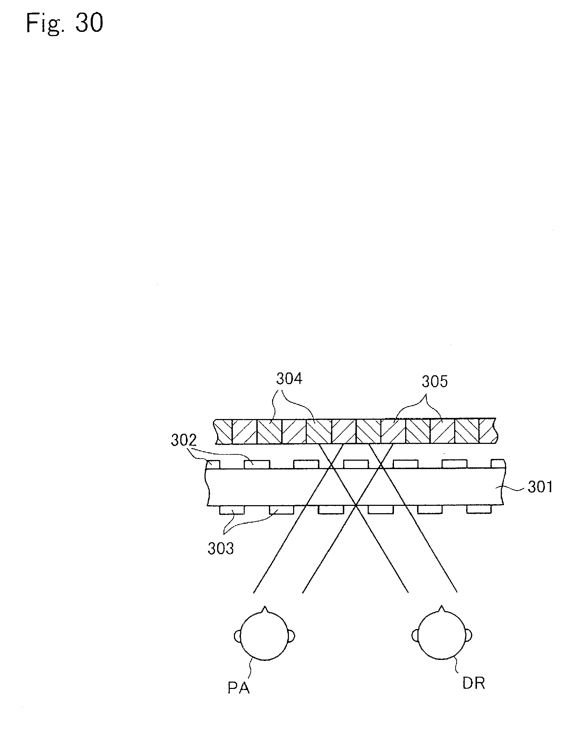

Fig. 30 is an illustration schematically showing a construction of a conventional display device which implements separate display;

Figs. 31(a) and 31(b) are illustrations showing an example displayed on a display unit constituting the display device;

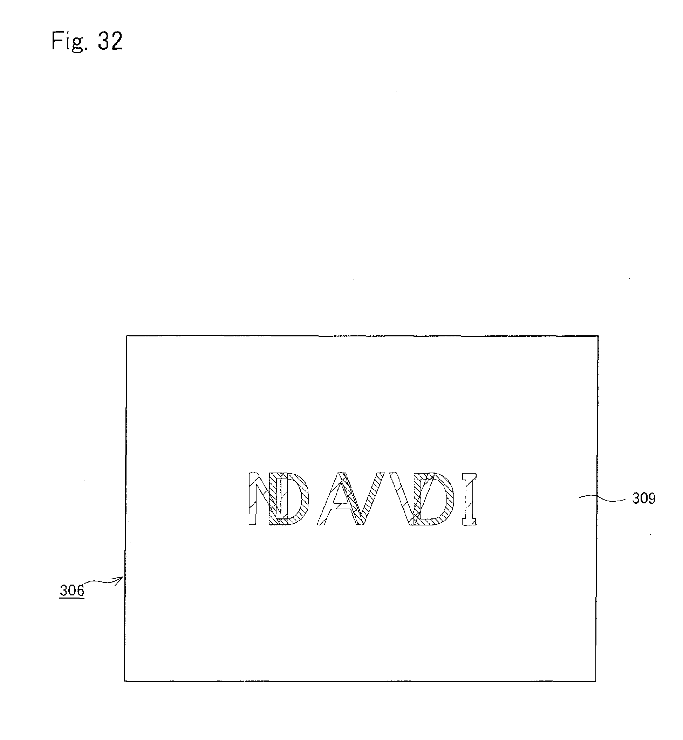

Fig. 32 is an illustration showing an example displayed on the display unit constituting the display device; and

Fig. 33 is an illustration schematically showing a construction of another conventional display device which implements separate display.

### Best Mode for Carrying Out the Invention

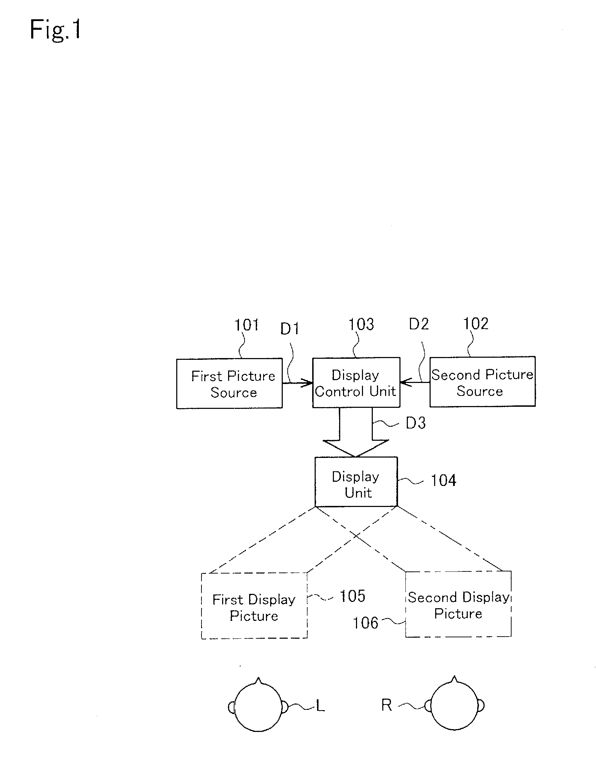

The preferred embodiments of the display control device, the display device, and the display method according to the present invention are described below by reference to the Figures noted above. A function of displaying individual images in a plurality of viewing directions on a common screen, which a display control device and a display device according to the present invention have, is described in detail by reference to Figs. 1-8. Here, a function of displaying individual images in two directions (right and left directions) on a common screen is described below, but said display function is not limited to displaying in two directions. It is possible to display individual images in three or more directions.

Fig. 1 is a conceptual illustration to describe a function that a display device according to the present invention has. First picture data D1 output from a first picture source 101 and second picture data D2 output from a second picture source 102 are input to a display control unit 103, and display data D3 processed in the display control unit 103 is output to a display unit 104.

By using the display device according to the present invention, in a direction of a viewer L who is seated left to the display unit 104, a first display picture 105 based on the first picture data D 1 is visibly displayed, while in a direction of a viewer R who is seated right to the display unit 104, a second display picture 106 based on the second picture data D2 is visibly displayed.

Thus, by using the display device according to the present invention, in accordance with the positional relations of the viewers with the display unit 104, in other words, in accordance with viewing angles to the display unit 104, the first display picture 105 and the second display picture 106 can be simultaneously seen by the viewer L and the viewer R, respectively. Moreover, each of the display pictures 105 and 106 is displayed on the whole display screen.

The first picture source 101 can be a movie picture from a DVD player, a received picture from a TV receiver or the like, while the second picture source 102 can be a map, a route guidance picture or the like from a car navigation system. The first picture data D1 and the second picture data D2 are provided to the display control unit 103, wherein processing for displaying these picture data on the display unit 104 substantially at the same time is conducted. Owing to this construction, different pieces of information or contents can be presented to the viewers L and R sitting left and right on one screen. It is matter of course that the viewers L and R sitting left and right should be able to watch the same picture if the first and second picture sources 101 and 102 are identical.

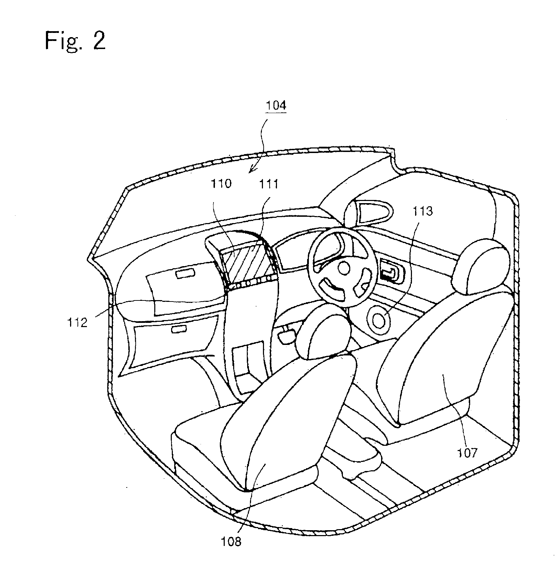

Fig. 2 is a perspective view showing a situation where the display device according to the present invention is mounted on a vehicle. The display unit 104 constituting the display device is installed around the center of a dashboard arranged in front of a driver's seat 107 and a passenger seat 108, and every kind of operations to the display device is conducted by operating a touch panel 111 arranged on a liquid crystal panel 110 of the display unit 104, an operating unit 112 arranged on the frame of the liquid crystal panel 110 of the display unit 104, or an infrared or wireless remote control (not shown). A speaker 113 connected to the display device is arranged on each door of the vehicle, and a voice in synchronization with a display picture, a warning sound or the like is output therethrough.

When it is assumed that the viewer R shown in Fig. 1 sits in the driver's seat 107 of Fig. 2 and the viewer L shown in Fig. 1 sits in the passenger seat 108 of Fig. 2, a picture which can be seen from a first viewing direction to the display unit 104 (the driver's seat direction) is a picture such as a map by the car navigation system, while a picture which can be seen from a second viewing direction (the passenger seat direction) can be a TV picture or a DVD picture, for example. As a result, the viewer R in the driver's seat 107 obtains driving assistance by the car navigation system, while the viewer L in the passenger seat 108 can enjoy a TV program or a DVD.

Moreover, since each picture is displayed with filling a 7-inch diagonal screen, for example, the screen size thereof is not reduced, differently from conventional multi-window display. That is, a driver (the viewer R) and a passenger (the viewer L) can see the screen as if to have a separate display to oneself, and it is possible to present information or contents desired by each of the viewers L and R.

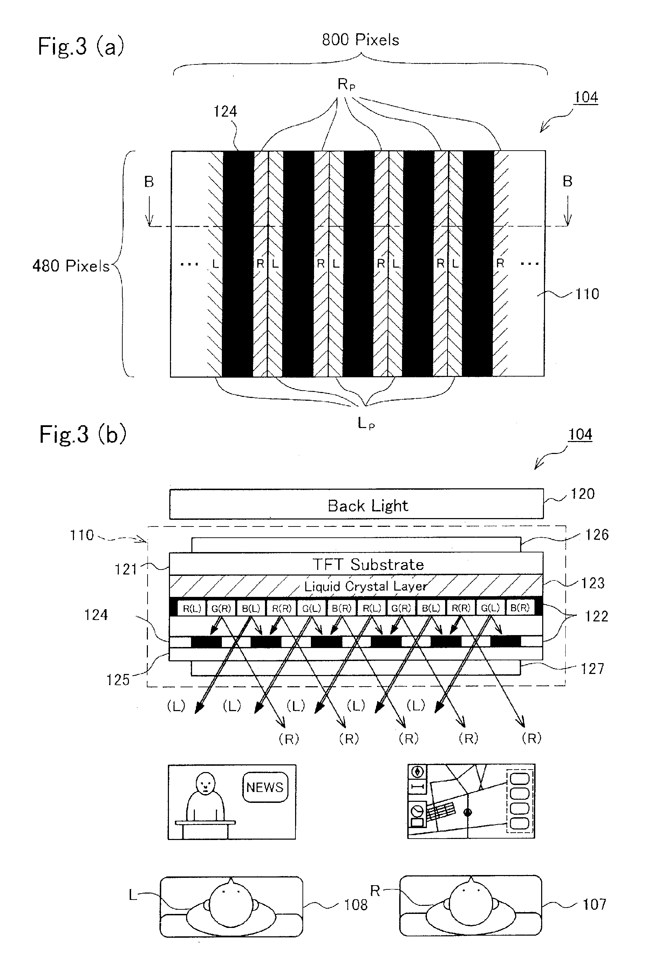

A construction of the display unit 104 of the display device according to the present invention is described below in detail. Fig. 3(a) is a diagram schematically showing a display status of the display unit 104 of the display device according to the present invention when viewed from the front, and Fig. 3(b) is a sectional view taken along the line B-B of Fig. 3(a).

The display unit 104 comprises the liquid crystal panel 110 and a back light 120. In the liquid crystal panel 110, a substrate wherein a liquid crystal layer 123 is sandwiched between a TFT (Thin Film Transistor) substrate 121 and a color filter substrate 122, parallax barriers 124, and a glass substrate 125 are sandwiched between a polarizing plate 126 arranged on the back light 120 side and a polarizing plate 127 arranged on the front face in the direction of light emission. The liquid crystal panel 110 is arranged slightly apart from the back light 120 and has pixels consisting of RGB colors (the three primary colors).

As the liquid crystal 110, for example, a liquid crystal panel with 800 pixels wide by 480 pixels high is adopted. Each pixel of the liquid crystal panel 110 is grouped alternately in a vertical direction into pixels Lp for the left (passenger seat 108) and pixels Rₚ for the right (driver's seat 107) for display control. That is, a half of the total number of lateral pixels of the liquid crystal panel 110 are used for display of the first display picture 105, while the rest of the pixels thereof are used for display of the second display picture 106.

The parallax barriers 124 are arranged laterally at prescribed intervals (whereby the outgoing direction of light from each pixel can be restricted to either right or left) in the form of vertical stripes. By the parallax barriers 124, display to the right (driver's seat) with the pixels Lp for the left (passenger seat) is blocked, but it can be seen from the left (passenger seat). On the other hand, display to the left side (passenger seat) with the pixels Rₚ for the right (driver's seat) is blocked, but it can be seen from the right (driver's seat). That is, when the liquid crystal panel 110 is viewed from the left side, the parallax barriers 124 conceal the pixels Rₚ for the right, and the pixels Lp for the left can be seen. On the other hand, when the liquid crystal panel 110 is viewed from the right side, the parallax barriers 124 conceal the pixels Lp for the left, and the pixels R_{P} for the right can be seen. Here, in this case, when the liquid crystal panel 110 is viewed from around the front, a part of the pixels L_{P} for the left and a part of the pixels R_{P} for the right can be seen, and therefore, the display pictures for the left and for the right look like overlapping each other. To these parallax barriers 124, for example, the construction disclosed in the Japanese Patent Application Laid-Open Publication No. 10-123461 or No. 11-84131 can be applied.

Here, if the display control on each pixel of the liquid crystal panel 110 and the arrangement of the parallax barriers 124 are changed, it is also possible to display different pictures in three or more directions. By making the parallax barriers 124 of an electrically drivable liquid crystal shutter or the like, the viewing angles may be made variable.

In Fig. 3, the pixels L_{P} for the left and the pixels R_{P} for the right which are alternately in line have RGB colors, but each vertical group may be in a single color such as an R line, a G line and a B line, or may be a line of two or more of RGB.

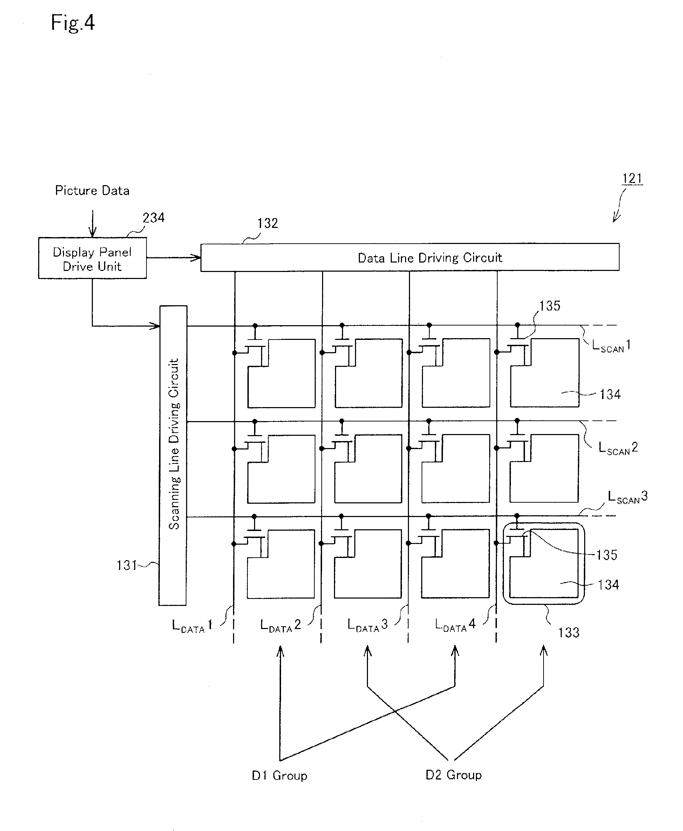

Fig. 4 is a circuit diagram showing a schematic construction of the TFT substrate 121 constituting the display unit 104. The TFT substrate 121 comprises a scanning line driving circuit 131, a data line driving circuit 132, scanning lines L_{SCAN}1, L_{SCAN}2, L_{SCAN}3, ... connected to the scanning line driving circuit 131, data lines L_{DATA}1, L_{DATA}2, L_{DATA}3, ... connected to the data line driving circuit 132, and a plurality of subpixels 133 formed from an area surrounded by each of the scanning lines L_{SCAN}1, L_{SCAN}2, L_{SCAN}3, ... with each of the data lines L_{DATA}1, L_{DATA}2, L_{DATA}3, ..., respectively as one unit. In each subpixel 133, a pixel electrode 134 for applying a voltage to the liquid crystal layer 123 and a TFT element 135 for switching control thereof are formed.

To the scanning line driving circuit 131 and the data line driving circuit 132, a below-described display panel drive unit 234 for driving the liquid crystal panel 110 is connected. The display panel drive unit 234 controls driving timing of the scanning line driving circuit 131 and the data line driving circuit 132. The scanning line driving circuit 131 conducts selective scanning of the TFT elements 135, and the data line driving circuit 132 controls voltage applied to the pixel electrodes 134.

By sending first pixel data (for the left) on the data lines L_{DATA}1 and L_{DATA}3, and second pixel data (for the right) on the data lines L_{DATA}2 and L_{DATA}4, for example, based on composite data of the first picture data D 1 and the second picture data D2, or each of the first and second picture data D1 and D2, each subpixel 133 forms a first picture data D1 group forming the first display picture 105 and a second picture data D2 group forming the second display picture 106. Here, in cases where different pictures are displayed in three directions, first, second and third picture data groups may be formed by drive control similar to the above-described control.

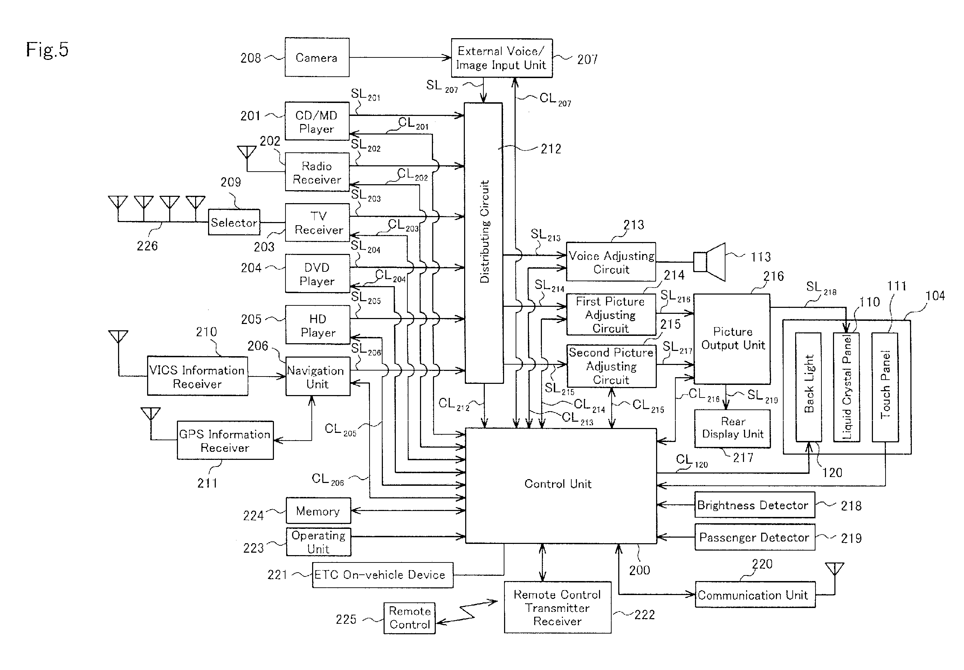

Fig. 5 is a block diagram schematically showing the principal part of an AV (Audio Visual) navigation system wherein the display device according to the present invention is adopted. Here, components having the same functions as each part described in Figs. 1-4 are similarly marked.

The AV navigation system has various kinds of sources including a CD/MD player 201, a radio receiver 202, a TV receiver 203, a DVD player 204, an HD (Hard Disk) player 205, and a navigation unit 206. Each of these sources is connected through signal lines SL₂₀₁-SL₂₀₆ to a distributing circuit 212. In addition, an external voice/image input unit 207 is connected through a signal line SL₂₀₇ to the distributing circuit 212. To the external voice/image input unit 207, a camera (e.g. a back monitoring camera) 208 is connected, and a video camera, a game (not shown) and the like are also connectable. To the TV receiver 203, a selector 209 is connected, and to the navigation unit 206, a VICS (Vehicle Information and Communication System) information receiver 210 and a GPS information receiver 211 are connected.

The distributing circuit 212 is connected through signal lines SL₂₁₃-SL₂₁₅ to a voice adjusting circuit 213, a first picture adjusting circuit 214, and a second picture adjusting circuit 215, respectively. The voice adjusting circuit 213 is connected to speakers 113. The first picture adjusting circuit 214 and the second picture adjusting circuit 215 are connected through signal lines SL₂₁₆ and SL₂₁₇ to a picture output unit 216, which is connected through signal lines SL₂₁₈ and SL₂₁₉ to a liquid crystal panel 110 of a display unit 104 and a rear display unit 217, respectively.

Here, the rear display unit 217 is arranged for rear seats of the vehicle, and the same picture as a picture displayed through the picture output unit 216 on the display unit 104 or either of a picture for driver's seat and a picture for passenger seat can be displayed thereon. The display unit 104 comprises a back light 120, the liquid crystal panel 110, and a touch panel 111, and an operation signal to the touch panel 111 is input to a control unit 200.

Moreover, a brightness detector (e.g. a light switch of a vehicle, a light sensor) 218, a passenger detector (e.g. a pressure sensor) 219, a communication unit 220 having a function of radio communication, an ETC (Electronic Toll Collection System) on-vehicle device 221, a remote control transmitter receiver 222, an operating unit 223, and a memory 224 are connected to the control unit 200.

The control unit 200 is connected through control lines CL₂₀₁-CL₂₀₇, CL₂₁₂-CL₂₁₆ and CL₁₂₀ to each part of the system such as the various kinds of sources 201-206, the distributing circuit 212, the adjusting circuits of each kind 213-215, the picture output unit 216, and the display unit 104, and has control over each part of the system.

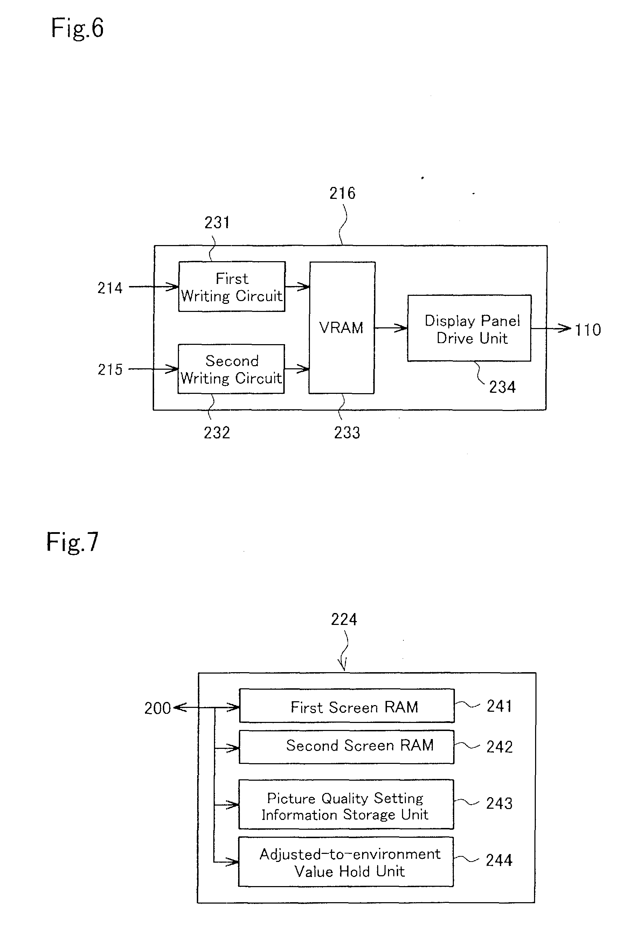

Fig. 6 is a block diagram showing a schematic construction of the picture output unit 216. The picture output unit 216 comprises a first writing circuit 231 connected to the first picture adjusting circuit 214, a second writing circuit 232 connected to the second picture adjusting circuit 215, a VRAM 233, and a display panel drive unit 234.

For example, the first writing circuit 231 and the second writing circuit 232 write in an appropriate area in the VRAM 233, respectively, based on picture data corresponding to odd-numbered lines of a picture in adjusted picture data and picture data corresponding to even-numbered lines thereof. The display panel drive unit 234 is a circuit for driving the liquid crystal panel 110, and drives corresponding pixels of the liquid crystal panel 110 based on picture data (composite data of the first picture data D1 with the second picture data D2) stored in the VRAM 233.

Here, since the picture data is written in the VRAM 233 in such a manner as to correspond to the picture for multiview display made by combining the first picture data D1 and the second picture data D2, only one driving circuit is required, and the operation thereof is the same as that of a driving circuit of a usual liquid crystal display device. In another embodiment, a display device may comprise a first display panel drive unit and a second display panel drive unit for driving corresponding pixels of a liquid crystal panel 110 based on each of first picture data D1 and second picture data D2, respectively, without combining the both.

Fig. 7 is a block diagram showing a schematic construction of the memory 224. The memory 224 comprises a first screen RAM 241 and a second screen RAM 242 in which user-specified picture quality adjusted values of a first display picture 105 and a second display picture 106 can be written, respectively, a picture quality setting information storage unit 243 in which selectable adjusted values in a plurality of levels are previously stored for adjusting each picture quality of the first display picture 105 and the second display picture 106, and an adjusted-to-environment value hold unit 244 which holds adjusted states of the picture quality of the first display picture 105 and the second display picture 106 to the surrounding environment. The picture quality setting information storage unit 243 and the adjusted-to-environment value hold unit 244 comprise an electrically rewritable nonvolatile memory such as a flash memory or a volatile memory with battery backup.

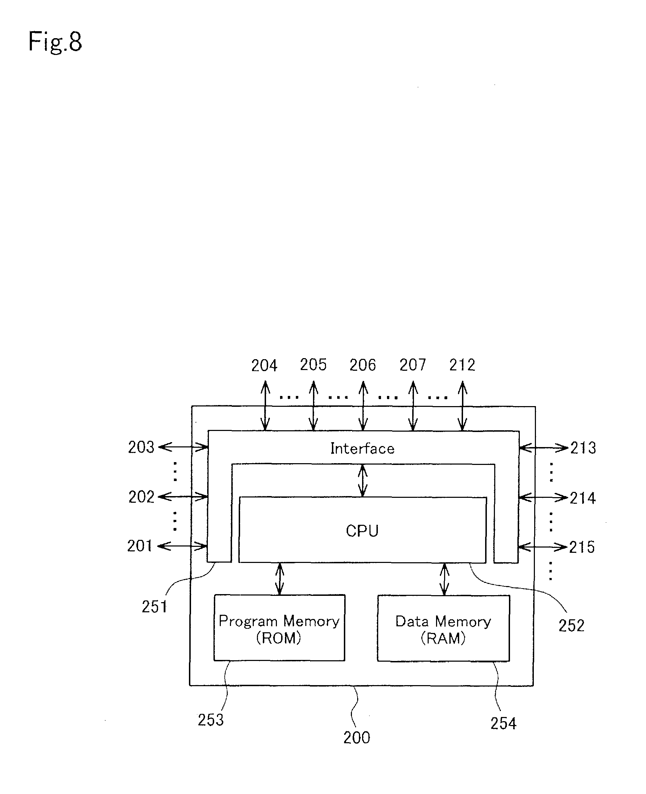

Fig. 8 is a block diagram showing a schematic construction of the control unit 200. The control unit 200 comprises an interface 251 connected to each part of the system, a CPU 252 which controls over each part of the system, a program memory (ROM) 253 in which programs of each kind necessary for system operations are stored, and a data memory (RAM) 254 in which each kind of data is stored. Here, the ROM 253 and the RAM 254 may be included in the CPU 252, or may be arranged outside the CPU 252. The ROM 253 may be an electrically rewritable nonvolatile memory such as a flash memory.

The control unit 200 controls the sources of each kind 201-206 and the distributing circuit 212 based on an operation signal from the touch panel 111, the operating unit 223, the remote control 225 or the like, so as to control outputs of picture data and voice data of selected two sources or one source. And the control unit 200 conducts control of distributing the picture data and voice data of the selected sources through the distributing circuit 212, that is, distributing the picture data to the first picture adjusting circuit 214 and the second picture adjusting circuit 215, and the voice data to the voice adjusting circuit 213. In the first picture adjusting circuit 214 and the second picture adjusting circuit 215, the brightness, color tone, contrast and the like of the picture data are adjusted based on a control signal from the control unit 200. The adjusted picture data is output to the picture output unit 216, wherein processing of driving the liquid crystal panel 110 to display a picture is conducted based on a control signal from the control unit 200. In the voice adjusting circuit 213, the distribution to each speaker, volume, voice and the like are adjusted based on a control signal from the control unit 200, and the adjusted voice is output through the speakers. Moreover, the control unit 200 conducts control of displaying an operation menu for controlling these sources of each kind.

For example, when the HD player 205 is selected, music data such as an MP3 file, picture data such as a JPEG file, map data for navigation and the like stored in a hard disk (not shown) are read out, and a menu display or picture data for selecting music data or the like is displayed on the display unit 104. Here, the navigation unit 206 has a map information memory (using a part of areas of said hard disk) in which map information used for navigation is stored, and can display a navigation picture produced by using information acquired through the VICS information receiver 210 and the GPS information receiver 211 on the display unit 104. The TV receiver 203 receives a desired analog TV broadcast wave or a digital TV broadcast wave through an antenna 226 selected by the selector 209.

The control unit 200 conducts control of changing settings of the output picture and voice based on information detected by the brightness detector 218 and the passenger detector 219. The communication unit 220 and the ETC on-vehicle device 221 are connected to the control unit 200, which conducts control of displaying toll information or the like from the ETC on-vehicle device 221 on the display unit 104, and controls the communication unit 220 for wireless connection with a cellular phone or the like to conduct control of displaying information about said control on the display unit 104. The control unit 200 also conducts processing of storing setting information of each kind such as picture quality setting information, programs, and vehicle information in the memory 224.

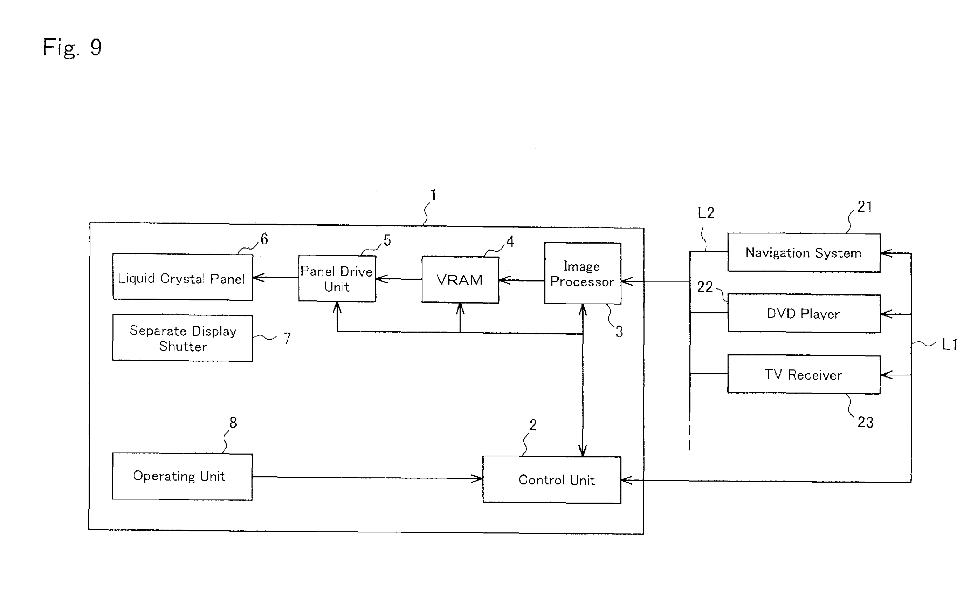

Fig. 9 is a block diagram schematically showing the principal part of an AV (Audio Visual) navigation system comprising a display device wherein a display control device according to a first embodiment is adopted. The display device adopted in the AV (Audio Visual) navigation system has a function of displaying individual images in a plurality of viewing directions on a common screen, similar to that described with Figs. 1-8. Here, images in the present invention include still pictures and moving images.

Reference numeral 1 in Fig. 9 represents a display device mounted in the center of an instrument panel of a vehicle. To the display device 1, electronic devices of each kind (e.g. a navigation system 21, a DVD player 22, and a TV receiver 23) mounted on the same vehicle are connected through a control signal line L1 and an image signal line L2.

The navigation system 21 comprises a map database, a GPS receiver and the like which are not shown. By using the map database and the GPS receiver, the current position of the vehicle is detected, and an image signal such as a map image around the current position of the vehicle is output.

The DVD player 22 comprises a DVD reader and associated parts not shown, and outputs a read DVD image signal. The TV receiver 23 comprises a tuner and associated parts not shown, and outputs an image signal of a received TV broadcast. In addition, to the display device 1, an audio system not shown is connected, and an image signal showing an audio-related screen such as a CD reproduction screen or a music selection screen in said audio system is output.

The display device 1 comprises a control unit 2 including a microcomputer, an image processor 3 for conducting processing of synthesizing an image signal input through the image signal line L2 from the above-mentioned electronic devices of each kind to image data for display based on a control signal from the control unit 2, a video memory (VRAM) 4 in which the image data synthesized by the image processor 3 is temporarily stored, a panel drive unit 5 for displaying the image data stored in the VRAM 4 on a liquid crystal panel 6, the liquid crystal panel 6, a separate display shutter 7 which enables separate display of images in three directions (a driver's seat direction, a center seat direction, and a passenger seat direction), arranged at the front of the liquid crystal panel 6, and an operating unit 8 having operating switches of each kind for giving operation instructions to the electronic devices of each kind and switching instructions of images displayed on the liquid crystal panel 6.

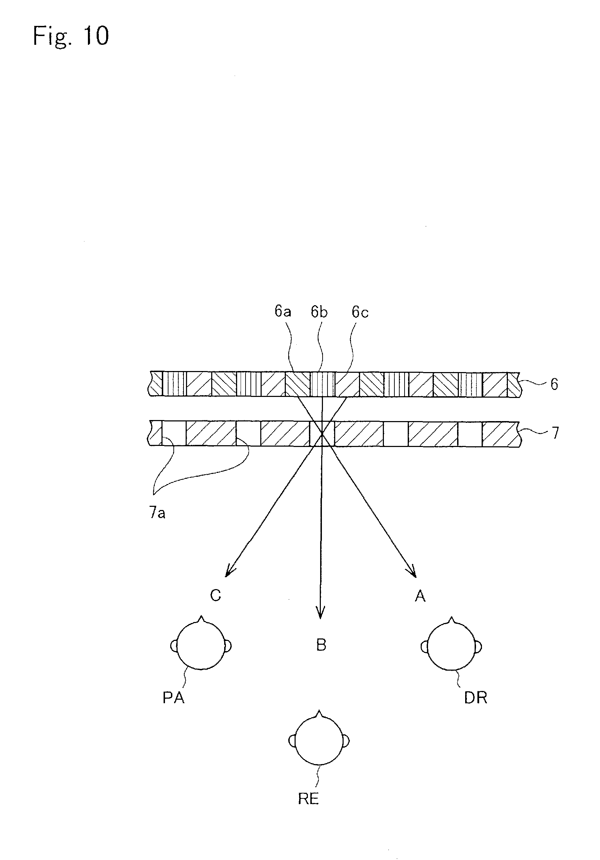

Fig. 10 is an illustration (partial horizontal sectional view) schematically showing a construction of the liquid crystal panel 6 and the separate display shutter 7. By arranging the separate display shutter 7 in which a plurality of openings (slits) 7a are arranged at the front of the liquid crystal panel 6, pixel lines 6a-6c which can be seen through the slits 7a are switched depending on the directions (A-C) from which they are viewed. In the first embodiment, the separate display shutter 7 has the slits 7a by one to three pixel lines 6a-6c on the liquid crystal panel 6. By inputting different image signals to the pixel lines 6a-6c each (i.e. an image for driver's seat to the pixel lines 6a, an image for center seat to the pixel lines 6b, and an image for passenger seat to the pixel lines 6c), the pixels which can be seen through the slits 7a, that is, the image varies when viewed from the directions A-C. As a result, a driver DR present in the A direction is allowed to see the image for driver's seat, a passenger RE in a center seat present in the B direction is allowed to see the image for center seat, and a passenger PA in a passenger seat present in the C direction is allowed to see the image for passenger seat.

In the display device 1, through a setting screen not shown, a display switching condition of an image signal input to the pixel lines 6b (the image for center seat) can be set. For example, a user can select and set a desired condition from the following conditions: condition a) to be linked to the image for driver's seat (i.e. when the image for driver's seat is switched, the image for center seat is also switched to the same image in synchronization with the switching); condition b) to be linked to the image for passenger seat (i.e. when the image for passenger seat is switched, the image for center seat is also switched to the same image in synchronization with the switching); condition c) no image is output to the pixel lines 6b (or a black picture may be output instead of no image): and condition d) an image selected for center seat is displayed. Here, the image for center seat in the above-described condition d can be selected and set by the user through another setting screen not shown when necessary.

When detecting a switching signal of a display image from the operating unit 8, the control unit 2 sends the switching signal through the control signal line L1 to each kind of electronic devices, which conducts switching of the image, output control of the image signal and the like based on the switching signal.

In the control unit 2, in which direction of the A-C directions the switching of the display image was indicated by the switching signal is judged. And whether the display switching condition set by the user is related to the judged switched direction or not is judged. When it is judged that the display switching condition is related to the switched direction (i.e. when the display image in the A direction (driver's seat direction) was switched while the display switching condition had been set to be the condition a, or when the display image in the C direction (passenger seat direction) was switched while the display switching condition had been set to be the condition b), the control unit 2 controls the image processor 3 and the panel drive unit 5 in such a manner as to switch the display image in the B direction (center seat direction) to the same display image as that in the switched direction (A direction or C direction). On the other hand, when it is judged that the display switching condition is not related to the switched direction (i.e. as the display switching condition, either the above-described condition c or d had been set), the unit control 2 controls the image processor 3 and the panel drive unit 5 so as to conduct display according to the display switching condition.

Voice signals output from the navigation system 21, the DVD player 22 and the TV receiver 23 are output by voice through an amplifier and speakers connected to an audio system not shown.

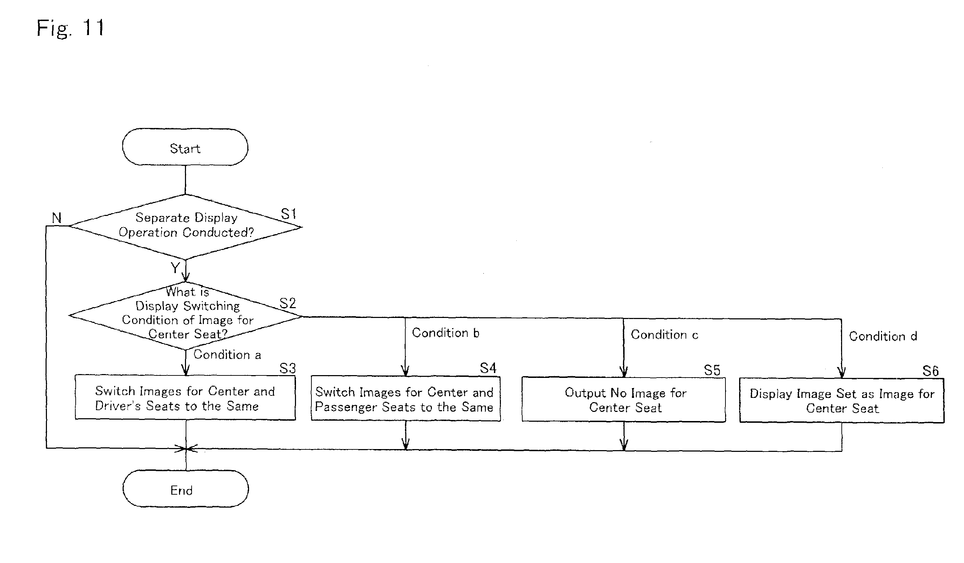

A processing operation performed by the control unit 2 in the display device 1 wherein the display control device according to the first embodiment is adopted is described below with a flowchart shown in Fig. 11. Here, this processing operation is repeatedly conducted during action of the display control device.

In Step S1, whether an operation for separate display was conducted or not is judged. When it is judged that no operation for separate display was conducted, the processing operation is concluded. On the other hand, when it is judged that an operation for separate display was conducted, the processing operation goes to Step S2.

In Step S2, what is a display switching condition of an image for center seat is judged. When it is judged that the display switching condition is the condition a (i.e. to be linked to an image for driver's seat), the processing operation goes to Step S3, wherein processing of switching the image for center seat and the image for driver's seat to the same image, for example, when the image for driver's seat is a map image by the navigation system, processing of switching the image for center seat to the map image (i.e. processing of inputting a map image signal to the pixel lines 6a and 6b of Fig. 10) is conducted, and then, the processing operation is concluded.

In Step S2, when it is judged that the display switching condition is the condition b (i.e. to be linked to an image for passenger seat), the processing operation goes to Step S4, wherein processing of switching the image for center seat and the image for passenger seat to the same image, for example, when the image for passenger seat is a DVD image, processing of switching the image for center seat to the DVD image (i.e. processing of inputting a DVD image signal to the pixel lines 6b and 6c of Fig. 10) is conducted, and then, the processing operation is concluded.

In Step S2, when it is judged that the display switching condition is the condition c (i.e. no image for center seat is displayed), the processing operation goes to Step S5, wherein processing of outputting no image for center seat (i.e. processing of inputting no image signal to the pixel lines 6b of Fig. 10) is conducted, and then, the processing operation is concluded.

In Step S2, when it is judged that the display switching condition is the condition d (i.e. as the image for center seat, an image selected for center seat is displayed), the processing operation goes to Step S6, wherein as the image for center seat, an image selected for center seat is displayed. For example, when a TV image has been previously set as an image for center seat, processing of displaying a TV image as the image for center seat (i.e. processing of inputting a TV image signal to the pixel lines 6b of Fig. 10) is conducted, and then, the processing operation is concluded.

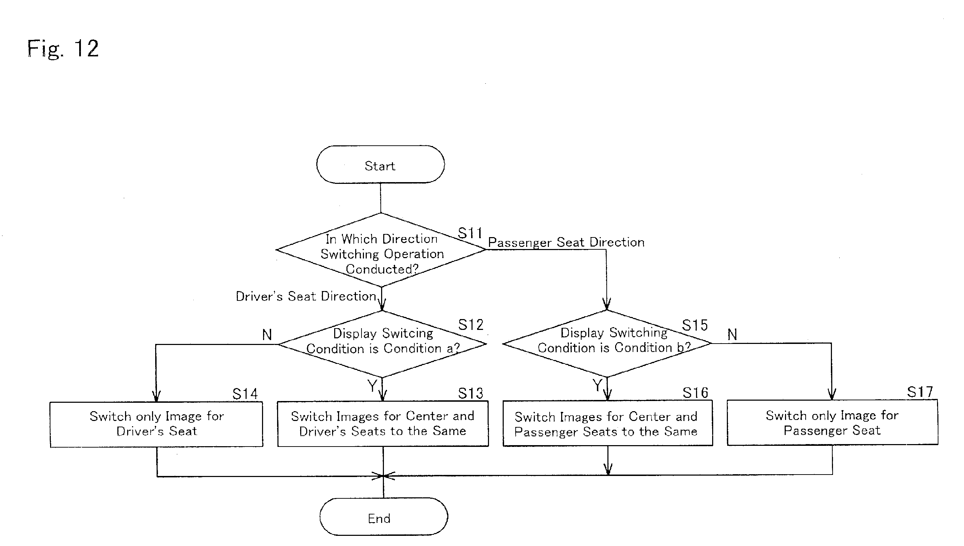

Another processing operation performed by the control unit 2 in the display device 1 wherein the display control device according to the first embodiment is adopted is described below with a flowchart shown in Fig. 12. Here, this processing operation is conducted in the case of separate display during action of the display control device.

In Step S11, in which direction of the driver's seat, center seat, and passenger seat directions a switching operation of the display image was conducted is judged. When it is judged that a switching operation of the display image in the driver's seat direction was conducted, the processing operation goes to Step S12.

In Step S12, whether a display switching condition of the image for center seat is the above-described condition a or not is judged. When it is judged that the display switching condition is the condition a, the processing operation goes to Step S13, wherein processing of switching the image for center seat and the image for driver's seat to the same image is conducted, and then, the processing operation is concluded.

On the other hand, in Step S12, when it is judged that the display switching condition is not the condition a, the processing operation goes to Step S 14, wherein processing of switching only the image for driver's seat is conducted, and then, the processing operation is concluded.

In Step S11, when it is judged that a switching operation of the display image in the passenger seat direction was conducted, the processing operation goes to Step S 15, wherein whether the display switching condition is the above-described condition b or not is judged. When it is judged that the display switching condition is the condition b, the processing operation goes to Step S16, wherein processing of switching the image for center seat and the image for passenger seat to the same image is conducted, and then, the processing operation is concluded.

On the other hand, in Step S 15, when it is judged that the display switching condition is not the condition b, the processing operation goes to Step S 17, wherein processing of switching only the image for passenger seat is conducted, and then, the processing operation is concluded.

When the display device 1 according to the first embodiment is used, based on the previously set display switching condition of the image for center seat, switching control of the display image in the direction in which a passenger RE in a center seat is present is conducted. Therefore, the display image in the direction of the passenger RE in the center seat can be automatically switched to a status desired by the user. As a result, it is possible to implement control for saving the trouble of conducting switching operations of the display image in the direction of the passenger RE in the center seat, and for increasing visibility of each display image displayed in different directions.

In cases where a condition that a display image in the direction of the passenger RE in the center seat is switched to the same image as a display image in a direction in which the driver DR is present is set as a display switching condition of the image for center seat, when a display image in the driver DR direction was switched, a display image in the direction of the passenger RE in the center seat is also switched in synchronization with the switching of the display image in the driver DR direction. Therefore, the passenger RE in the center seat can always enjoy the same image as the driver DR without conducting a switching operation.

In cases where a condition that a display image in the direction of the passenger RE in the center seat is switched to the same image as a display image in the direction of the passenger PA in the passenger seat is set as a display switching condition of the image for center seat, when a display image in the direction of the passenger PA in the passenger seat was switched, a display image in the direction of the passenger RE in the center seat is also switched in synchronization with the switching of the display image in the direction of the passenger PA in the passenger seat. Therefore, the passenger RE in the center seat can always enjoy the same image as the passenger PA in the passenger seat without conducting a switching operation.

In cases where a condition that a display image in the direction of the passenger RE in the center seat is not output is set as a display switching condition of the image for center seat, the influence that a display image in the driver DR direction and a display image in the direction of the passenger PA in the passenger seat are mixed, leading to an image which is awkward to see (the influence of crosstalk) can be made smaller. Therefore, it is possible to allow the driver DR and the passenger PA in the passenger seat to see clearer fine images.

In cases where a condition that an image selected for center seat is displayed as a display image in the direction of the passenger RE in the center seat is set as a display switching condition of the image for center seat, even if switching of the display image in the direction of the driver DR or the passenger PA in the passenger seat was conducted, the passenger RE in the center seat can always enjoy the image set as an image for center seat.

Here, in the first embodiment, cases where the switching condition of the image for center seat is set as a display switching condition are described. However, in another embodiment, a display switching condition of an image for passenger seat or a display switching condition of images for center seat and for passenger seat may be able to be set. For example, when there is no passenger in a passenger seat, a condition that no image is output in the passenger seat direction can be set. Here, whether there is a passenger in the passenger seat or not can be judged, for example, based on signals from a sitting sensor installed in the passenger seat and the like.

By such construction, when the condition that no display image is output in the direction of the passenger PA in the passenger seat has been set, it is possible to prevent a situation where an image for a passenger in the passenger seat is reflected by a window so as to blind the driver DR during the nighttime or else.

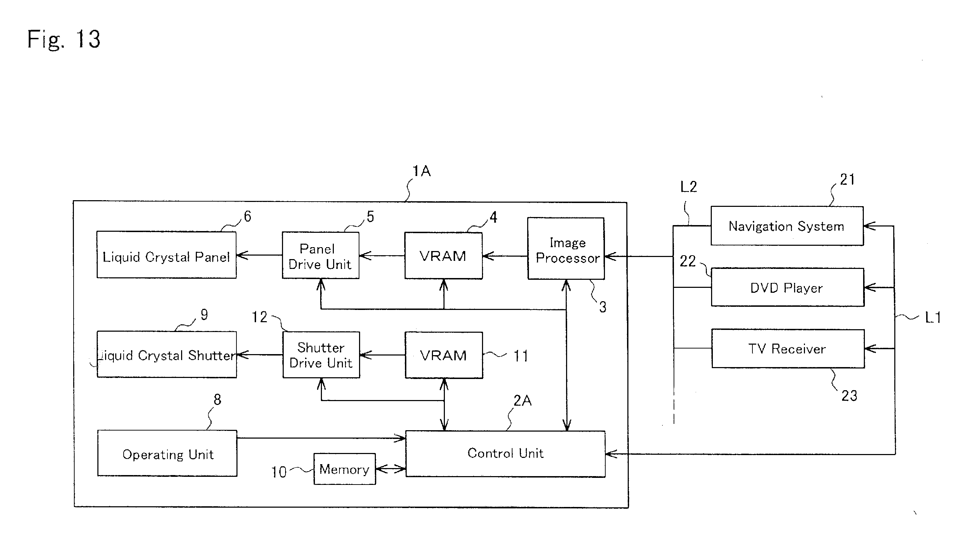

Fig. 13 is a block diagram schematically showing the principal part of an AV navigation system comprising a display device wherein a display control device according to a second embodiment is adopted. Here, components having the same functions as those of the AV navigation system shown in Fig. 9 are similarly marked, and are not described below.

Reference numeral 1A in Fig. 13 represents a display device mounted in the center of an instrument panel of a vehicle. To the display device 1A, electronic devices of each kind (e.g. a navigation system 21, a DVD player 22, and a TV receiver 23) mounted on the same vehicle are connected through a control signal line L1 and an image signal line L2.

The display device 1A comprises a control unit 2A including a microcomputer, an image processor 3, a VRAM 4, a panel drive unit 5, a liquid crystal panel 6, a liquid crystal shutter (light transmission area changing unit) 9 for changing an area in which each image displayed on the liquid crystal panel 6 can be seen separately, that is, for changing a transmission area of light in each viewing direction, a memory 10 in which data concerning shielding patterns (shutter patterns) of the liquid crystal shutter 9 is stored, a video memory (VRAM) 11 in which picture data showing a shutter pattern read from the memory 10 is temporarily stored, a shutter drive unit 12 which drives the liquid crystal shutter 9 to display the picture data showing the shutter pattern stored in the VRAM 11, and an operating unit 8.

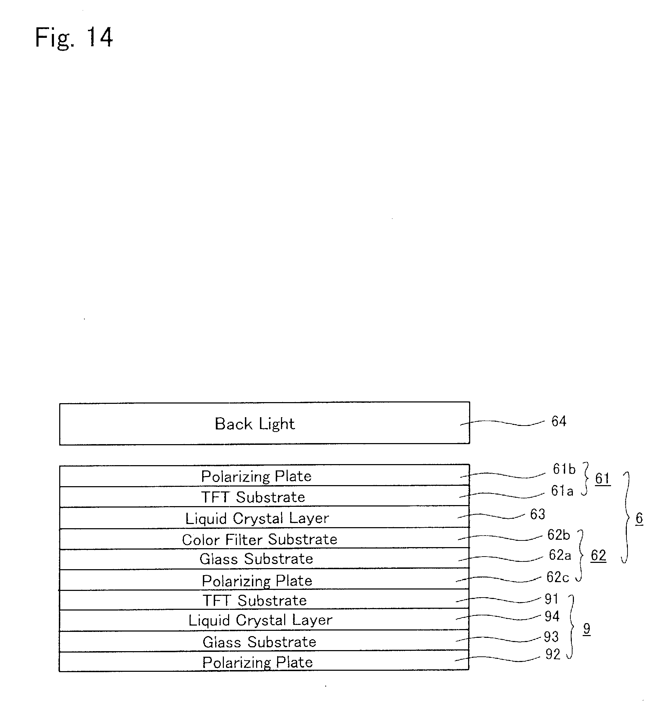

Fig. 14 is a partial horizontal sectional view schematically showing a construction of the liquid crystal panel 6 and the liquid crystal shutter 9 constituting the display device 1A. The liquid crystal panel 6 is consisted of a TFT-side substrate module 61 and a counter-electrode-side substrate module 62 with a liquid crystal layer 63 encapsulated therebetween. The TFT-side substrate module 61 comprises a TFT substrate 61a in which a transparent conductive film (including a pixel electrode and a driving transistor) (neither of them shown) is formed on a glass substrate (the front side thereof), and a polarizing plate 61b arranged on the back side of the TFT substrate 61a. On the transparent conductive film, an orientation film not shown is formed, and at the back side of the TFT-side substrate module 61, a back light 64 is arranged.

The counter-electrode-side substrate module 62 comprises a glass substrate 62a, a color filter substrate 62b arranged on the back side of the glass substrate 62a, and a polarizing plate 62c arranged on the front side of the glass substrate 62a. Here, on the back side of the color filter substrate 62b, an orientation film and a transparent conductive film (counter electrode) which are not shown are formed.

The liquid crystal shutter 9 is arranged on the front side of the liquid crystal panel 6, comprising a TFT substrate (in which a transparent conductive film is formed on a glass substrate) 91 arranged on the polarizing plate 62c of the liquid crystal panel 6, a glass substrate 93 with a polarizing plate 92 on the front side thereof and with an orientation film and a transparent conductive film (counter electrode) (neither of them shown) formed on the back side thereof, a liquid crystal layer 94 encapsulated between the TFT substrate 91 and the glass substrate 93.

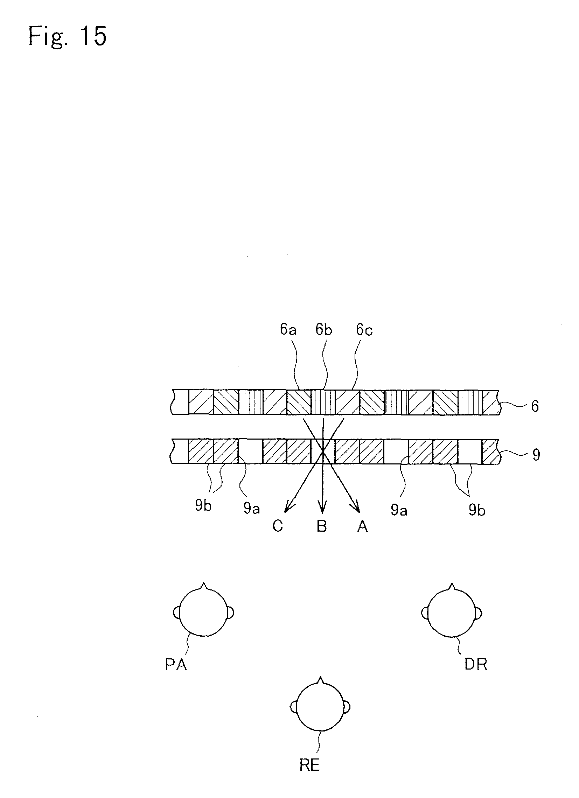

Fig. 15 is a diagram (partial horizontal sectional view) showing a simplified construction of the liquid crystal panel 6 and the liquid crystal shutter 9 shown in Fig. 14. The liquid crystal shutter 9 is arranged on the front of the liquid crystal panel 6. By controlling an application or no application of a voltage to each liquid crystal element 9b constituting the liquid crystal shutter 9 (i.e. ON/OFF switching control of each driving transistor of the transparent conductive film formed in the TFT substrate 91), a light transmission status of each liquid crystal element 9b is controlled, and the slits 9a through which light can be transmitted can be formed in arbitrary places. Here, Fig. 15 shows an example of a shutter pattern when separate display in A-C directions (a driver's seat direction, a center seat direction, and a passenger seat direction) is conducted.

Data concerning shutter patterns (forms) for forming the slits 9a is previously stored in the memory 10. The control unit 2A reads a shutter pattern responding to a change instruction of a visible region from the memory 10, and based on the read-out shutter pattern, drive control of the liquid crystal shutter 9 is conducted. By such drive control of the liquid crystal shutter 9, it is possible to change the visible regions (the ratio therebetween) of images separately displayed in different directions.

The drive control of the liquid crystal shutter 9 performed by the control unit 2A can be conducted under the following condition: 1) according to the number of images displayed on the liquid crystal panel 6; 2) according to the types of images displayed on the liquid crystal panel 6 (such as a combination of separately displayed images); 3) when a changing operation of a visible region was conducted by a user; or 4) when an operation to an image (e.g. each kind of menu operations to a navigation system, or an operation of chapter selection of a DVD) was conducted by the user. These conditions for driving the liquid crystal shutter 9 can be user-selectable through a setting screen not shown.

The control unit 2A conducts drive control of the liquid crystal shutter 9 so as to variably control the visible region of each image separately displayed, and also conducts adjusting control of the display resolution of each image in accordance with the variable control of the visible regions, or conducts variable control of the visible regions by the liquid crystal shutter 9 in accordance with the adjusting control of the display resolution of each image.

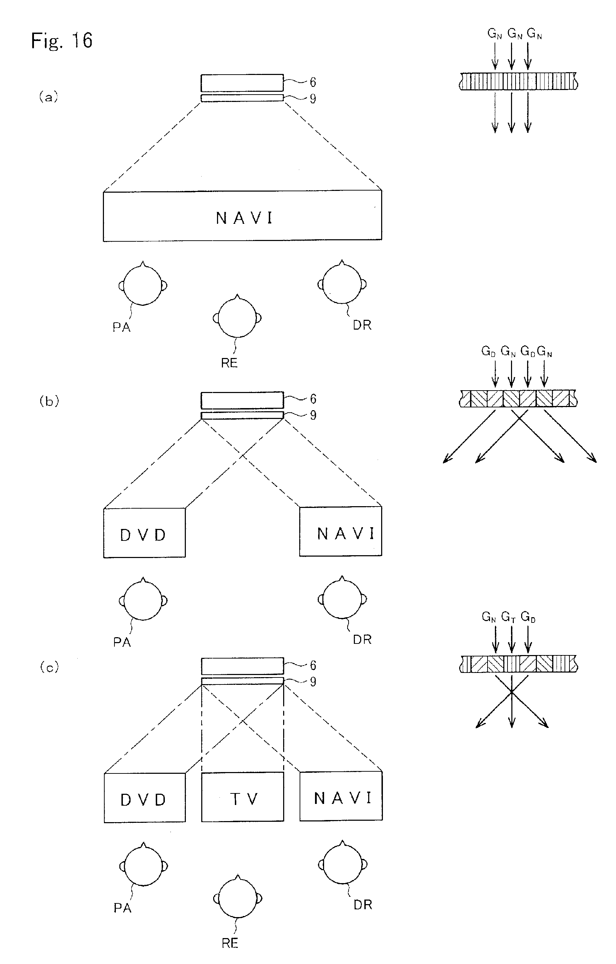

Fig. 16 is an illustration to describe drive control of the liquid crystal shutter 9 and image output control to the liquid crystal panel 6 performed by the control unit 2A according to the number of images displayed on the liquid crystal panel 6.

Fig. 16(a) shows a situation where a map image (NAVI) is displayed to a driver DR, a passenger RE in a center seat, and a passenger PA in a passenger seat (separate display is not being conducted). In this case, all the liquid crystal elements 9b of the liquid crystal shutter 9 are controlled to transmit light. On the other hand, to each pixel line constituting the liquid crystal panel 6, only map image signals G_{N} are input, and therefore, a high-resolution map image can be displayed.

Fig. 16(b) shows a situation where separate display for allowing the driver DR to see a map image and allowing the passenger PA in the passenger seat to see a DVD image (DVD) is being conducted. The liquid crystal shutter 9 is controlled so as to be in a shutter pattern for separate display in the driver DR direction and in the direction of the passenger PA in the passenger seat. On the other hand, to each pixel line constituting the liquid crystal panel 6, map image signals G_{N} and DVD image signals G_{D} are alternately input.

Fig. 16(c) shows a situation where separate display for allowing the driver DR to see a map image, allowing the passenger RE in the center seat to see a TV image (TV), and allowing the passenger PA in the passenger seat to see a DVD image is being conducted. The liquid crystal shutter 9 is controlled so as to be in a shutter pattern for separate display in the driver DR direction, in the direction of the passenger RE in the center seat, and in the direction of the passenger PA in the passenger seat. On the other hand, to each pixel line constituting the liquid crystal panel 6, map image signals G_{N}, TV image signals G_{T}, and DVD image signals G_{D} are input in turn.

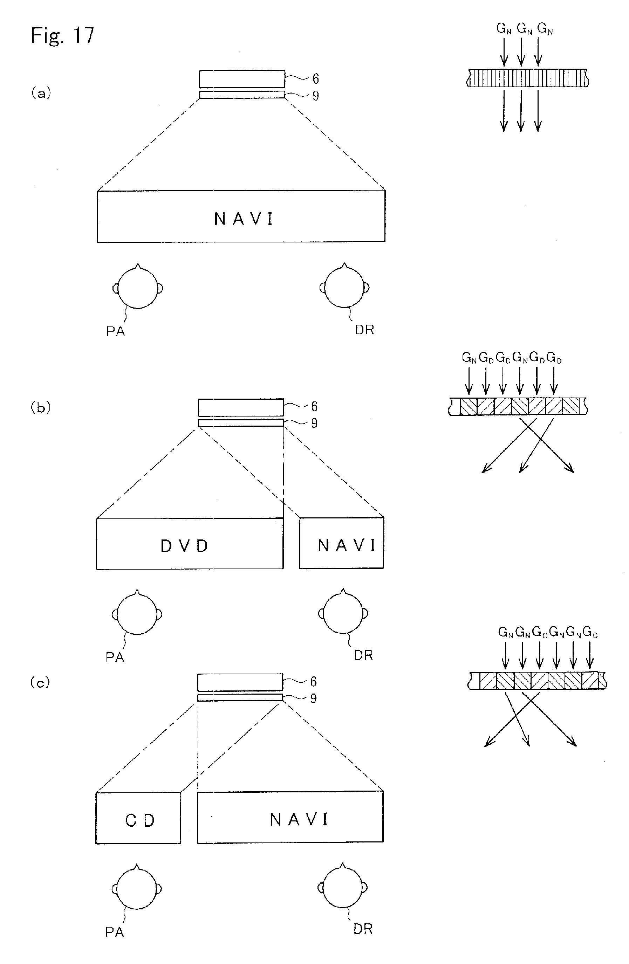

Fig. 17 is an illustration to describe drive control of the liquid crystal shutter 9 and image output control to the liquid crystal panel 6 performed by the control unit 2A according to the types of images displayed on the liquid crystal panel 6.

Fig. 17(a) shows a situation where a map image (NAVI) is displayed to the driver DR and the passenger PA in the passenger seat (separate display is not being conducted) (the same situation as Fig. 16(a)). When separate display for allowing the passenger PA in the passenger seat to see a DVD image is instructed through the operating unit 8 by the user, the display status is switched to a display status shown in Fig. 17(b).

Here, the order of priority of images whose visible regions are extended is previously set. In this case, priority is given to a DVD image, a TV image, a map image, and a CD image (a reproduction screen of a CD) in order (the DVD image has the highest priority). Or a user may be able to set the priority through a prescribed setting screen.

In the case of Fig. 17(b), the liquid crystal shutter 9 is controlled to be in a shutter pattern in which the visible region of the DVD image becomes wide. On the other hand, to each pixel line constituting the liquid crystal panel 6, map image signals G_{N} and DVD image signals G_{D} are input in proportion of 1:2, so as to make an adjustment to increase the display resolution of the DVD image. Or it is possible to make an adjustment to make the proportion of the DVD image signals G_{D} further higher.

Then, when the reproduction of the DVD ended and an operation for displaying a CD selection screen was conducted, the situation of Fig. 17(b) is switched to that of Fig. 17(c). In this case, the liquid crystal shutter 9 is controlled to be in a shutter pattern in which the visible region of the map image becomes wide. On the other hand, to each pixel line constituting the liquid crystal panel 6, map image signals G_{N} and CD image signals G_{c} are input in proportion of 2:1, so as to make an adjustment to increase the display resolution of the map image. Or it is possible to make an adjustment to make the proportion of the map image signals G_{N} further higher.

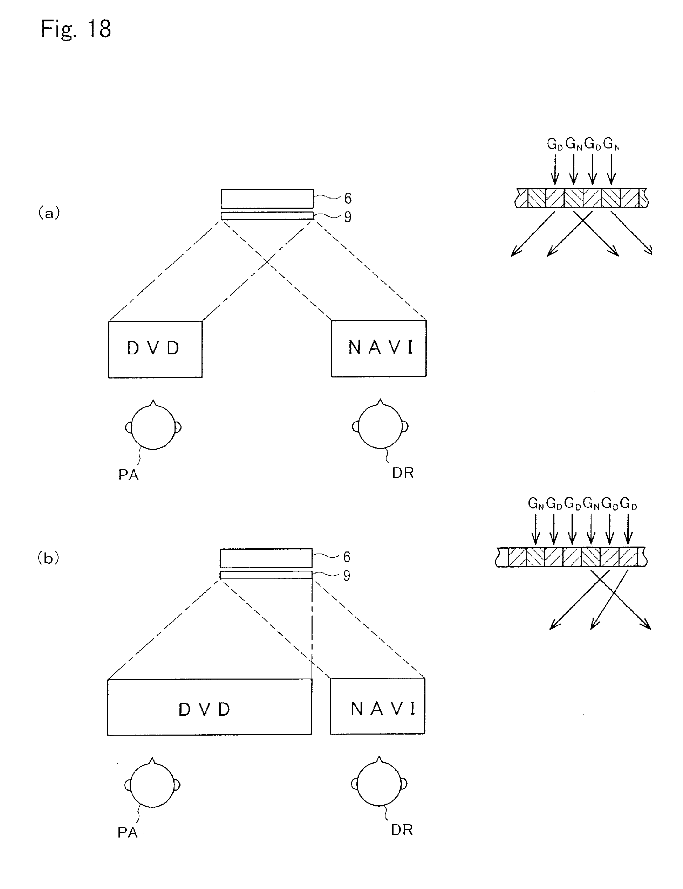

Fig. 18 is an illustration to describe drive control of the liquid crystal shutter 9 and image output control to the liquid crystal panel 6 performed by the control unit 2A when a changing operation of a visible region by the user was conducted or when an operation to a display image was conducted.

Fig. 18(a) shows a situation where separate display for allowing the driver DR to see a map image and allowing the passenger PA in the passenger seat to see a DVD image (DVD) is being conducted. The liquid crystal shutter 9 is controlled to be in a shutter pattern in which separate display is conducted in the driver DR direction and in the direction of the passenger PA in the passenger seat. On the other hand, to each pixel line constituting the liquid crystal panel 6, map image signals G_{N} and DVD image signals G_{D} are alternately input.

When a changing operation of the visible region of the DVD image or an operation to the DVD image was detected in the situation shown in Fig. 18(a), it is switched to the display status shown in Fig. 17(b). That is, the liquid crystal shutter 9 is controlled to be in a shutter pattern in which the visible region of the DVD image becomes wide. On the other hand, to each pixel line constituting the liquid crystal panel 6, the map image signals G_{N} and the DVD image signals G_{D} are input in proportion of 1:2, so as to make an adjustment to increase the display resolution of the DVD image. In the case of an operation to the DVD image (such as a chapter selecting operation), it is possible to conduct control for returning to the display status of Fig. 17(a) after a predetermined time.

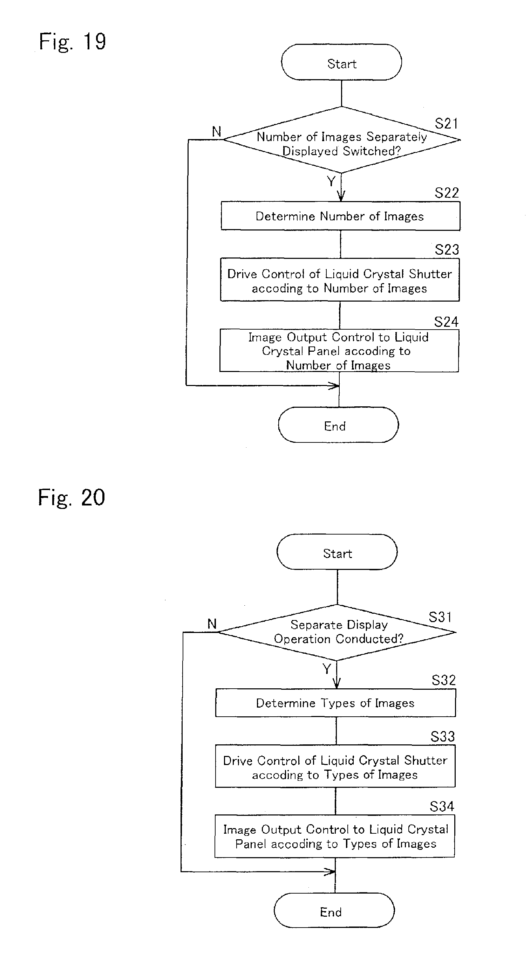

A processing operation performed by the control unit 2A in the display device 1A wherein the display control device according to the second embodiment is adopted is described below with a flowchart shown in Fig. 19. Here, this processing operation is repeatedly conducted during action of the display control device.

In Step S21, whether a switching operation of the number of images separately displayed was conducted or not is judged. When it is judged that no switching operation of the number of images separately displayed was conducted, the processing is concluded. On the other hand, when it is judged that a switching operation of the number of images separately displayed was conducted, the processing operation goes to Step S22.

In Step S22, processing of determining the number of images separately displayed is conducted, and then, the processing operation goes to Step S23. In Step S23, processing of drive control of the liquid crystal shutter 9 to form a shutter pattern according to the determined number of images, that is, processing of reading data showing a shutter pattern responding to the determined number of images from the memory 10, writing the shutter pattern in the VRAM 11 as picture data, and driving the shutter drive unit 12 so as to output the picture data to the liquid crystal shutter 9 is conducted, and then, the processing operation goes to Step S24.

In Step S24, image output control to the liquid crystal panel 6 according to the determined number of images, that is, processing of combining picture data according to the determined number of images, writing the picture data in the VRAM 4, and driving the panel drive unit 5 so as to output the picture data to the liquid crystal panel 6 is conducted, and then, the processing operation is concluded.

Another processing operation performed by the control unit 2A in the display device 1A wherein the display control device according to the second embodiment is adopted is described below with a flowchart shown in Fig. 20. Here, this processing operation is repeatedly conducted during action of the display control device.

In Step S31, whether an operation of separate display (including an operation for switching to separate display and an image switching operation during separate display) was conducted or not is judged. When it is judged that no operation of separate display was conducted, the processing operation is concluded. On the other hand, when it is judged that an operation of separate display was conducted, the processing operation goes to Step S32.

In Step S32, processing of determining the types of images separately displayed (e.g. which of a map image, a DVD image, a TV image, and a CD image each image is) is conducted, and the processing operation goes to Step S33. In Step S33, control of the liquid crystal shutter 9 according to the determined types of images, for example, when the image for driver's seat is a map image and the image for passenger seat is a DVD image, processing of reading a shutter pattern for extending the visible region of the DVD image from the memory 10, writing the shutter pattern in the VRAM 11, and outputting the shutter pattern to the liquid crystal shutter 9 is conducted, and then, the processing operation goes to Step S34.

In Step S34, image output control to the liquid crystal panel 6 according to the determined types of images, for example, when the image for driver's seat is a map image and the image for passenger seat is a DVD image, processing of enhancing the proportion of the DVD image signals input to pixel lines of the liquid crystal panel 6 so as to display a DVD image at a higher display resolution is conducted, and then, the processing operation is concluded.

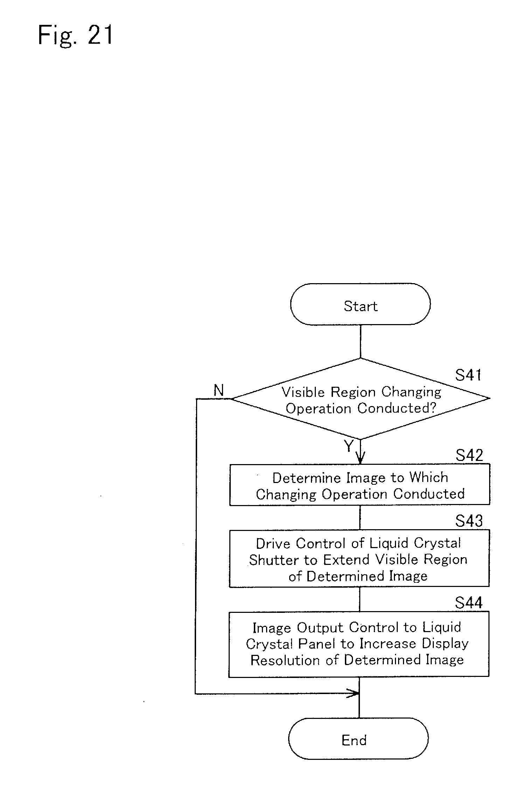

Still another processing operation performed by the control unit 2A in the display device 1A wherein the display control device according to the second embodiment is adopted is described below with a flowchart shown in Fig. 21. Here, this processing operation is repeatedly conducted during separate display.

In Step S41, whether a changing operation of a visible region to any of images was conducted or not is judged. When it is judged that no changing operation of a visible region was conducted, the processing operation is concluded. On the other hand, when it is judged that a changing operation of a visible region was conducted, the processing operation goes to Step S42.

In Step S42, processing of determining an image to which the changing operation of a visible region was conducted is conducted, and then, the processing operation goes to Step S43. In Step S43, processing of drive control of the liquid crystal shutter 9 to extend the visible region of the determined image, for example, when a changing operation of a visible region to the image for driver's seat was conducted, processing of reading a shutter pattern for extending the visible region of the image for driver's seat from the memory 10, writing the shutter pattern in the VRAM 11, and outputting the shutter pattern to the liquid crystal shutter 9 is conducted, and then, the processing operation goes to Step S44.

In Step S44, image output control to the liquid crystal panel 6 according to the determined image, for example, processing of enhancing the proportion of the signals of the image for driver's seat input to the pixel lines of the liquid crystal panel 6 responding to the shutter pattern in which the visible region of the image for driver's seat is extended so as to display the image for driver's seat at a higher display resolution is conducted, and then, the processing operation is concluded.

When the display device 1A according to the second embodiment is used, a shutter pattern according to a changing condition of a visible region is read from the memory 10, and based on the shutter pattern, the visible region of a display image is variably controlled by the liquid crystal shutter 9. Therefore, it is possible to freely change the visible region of the display image into a prescribed pattern, resulting in an implementation of varied image display. In addition, since display control is conducted in such a manner as to bring the variable control of the visible region of the display image into correspondence with the display resolution of the display image displayed on the liquid crystal panel 6, it is possible to display an image at a higher display resolution responding to a change of the visible region of the display image, and therefore, it is possible to extend or narrow the visible region of a prescribed image, resulting in an improvement in visibility of the prescribed image.

Moreover, since control of changing the visible region of the display image according to the number of images displayed on the liquid crystal panel 6 is brought into correspondence with adjusting control of the display resolution of the display image, the smaller the number of images displayed on the liquid crystal panel 6 becomes, the higher the resolution of the display image can be made, resulting in an improvement in visibility.

Since control of changing the visible region of the display image according to the types of images displayed on the liquid crystal panel 6 is brought into correspondence with adjusting control of the display resolution of the display image, the display resolution of the image whose visible region was extended can be increased, resulting in an improvement in visibility.

Since control of changing the visible region of the display image according to a changing operation of a visible region to any of images displayed on the liquid crystal panel 6 is brought into correspondence with adjusting control of the display resolution of the display image, it is possible to increase the display resolution of the image whose visible region was extended, resulting in an improvement in visibility.

Since control of changing the visible region of the display image according to an operation to any of images displayed on the liquid crystal panel 6 is brought into correspondence with adjusting control of the display resolution of the display image, it is possible to extend the visible region of the image to which an operation was detected and also possible to increase the display resolution thereof, resulting in improvements in visibility and operability.

Here, in the second embodiment, a case where control of extending the visible region of an image to which an operation was conducted was described. However, in another embodiment, control of narrowing the visible region of an image to which an operation was conducted or an instructing operation to extend or narrow the visible region may be conducted so as to conduct control of changing the visible region of an image according to the instructing operation.

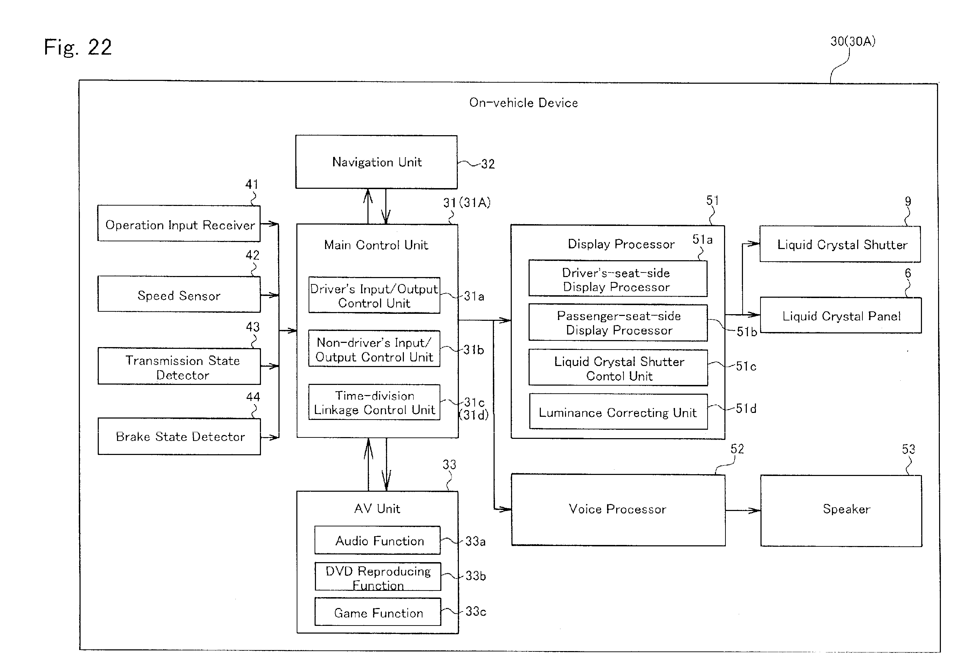

Fig. 22 is a block diagram showing a schematic construction of an on-vehicle device wherein a display device according to a third embodiment is adopted. Here, components having the same functions as those of the display device 1A shown in Fig. 13 are similarly marked.

An on-vehicle device 30 comprises a main control unit 31, a navigation unit 32, an AV (Audio Visual) unit 33, an operation input receiver 41, a speed sensor 42, a transmission state detector 43, a brake state detector 44, a display processor 51, a voice processor 52, a liquid crystal shutter 9, a display (hereinafter, referred to as a liquid crystal panel) 6, and speakers 53.

The operation input receiver 41 is a processor which receives operation inputs by passengers by using a switch, a touch panel or the like. The speed sensor 42 is a sensor which detects a speed of the vehicle from a speed of rotation of wheels of the vehicle. The transmission state detector 43 is a sensor which acquires a state of a transmission of the vehicle. And the brake state detector 44 is a sensor which detects an operational state of a brake mechanism of the vehicle.

The navigation unit 32 is a unit which conducts setting of a travel route of the vehicle and guidance, and concretely, acquires the current position of the vehicle from the GPS (Global Positioning System), determines the road on which the vehicle is running by using map data, and conducts route guidance by using the liquid crystal panel 6 and the speakers 53.

The AV unit 33 is a unit which provides passengers of the vehicle with contents data acquired by receiving radio broadcasting or TV broadcasting or contents data read from a storage medium such as a CD, a DVD or an HD. Here, the AV unit 33 has an audio function 33a, a DVD reproducing function 33b, and a game function 33c therewithin.

The main control unit 31 is a control unit for controlling each part of the on-vehicle device 30. The main control unit 31 receives inputs from the operation input receiver 41, the speed sensor 42, the transmission state detector 43, and the brake state detector 44 so as to control operations of the navigation unit 32 and the AV unit 33, and controls picture outputs to the liquid crystal panel 6 through the display processor 51, and voice outputs to the speakers 53 through the voice processor 52.

The speakers 53 are units for conducting voice outputs to passengers, and the output contents thereof are prepared by the voice processor 52. The liquid crystal panel 6 is a unit for conducting display outputs to passengers, and the display contents thereof are prepared by the display processor 51. The liquid crystal shutter 9 is a directivity control unit for controlling directivities of display outputs by the liquid crystal panel 6. Here, the construction of the liquid crystal panel 6 and the liquid crystal shutter 9 is almost the same as that shown in Fig. 14. Drive control of the liquid crystal shutter 9 is conducted by a liquid crystal shutter control unit 51c of the display processor 51.

That is, by ON/OFF switching control of a driving transistor connected to each pixel electrode of a transparent conductive film formed on a TFT substrate 91 constituting the liquid crystal shutter 9 (see Fig. 14), in other words, by controlling an application or no application of a voltage to a liquid crystal layer 94 between each pixel electrode and its counter electrode, an arrangement of liquid crystal molecules is changed so as to match the travel direction of light transmitted through a polarizing plate 62c with the orientation of a polarizing plate 92, or not to match them, resulting in switching between transmission of light and interruption thereof.

The main control unit 31 has a driver's input/output control unit 31a, a non-driver's input/output control unit 31b, and a time-division linkage control unit 31c. The driver's input/output control unit 31a is a control unit for controlling reception of operation inputs from a driver and outputs to the driver, and the non-driver's input/output control unit 31b is a control unit for controlling reception of operation inputs from a non-driver (a passenger in a passenger seat in this embodiment) and outputs to the non-driver.

Here, a display output to the driver by the driver's input/output control unit 31a and a display output to the non-driver (passenger in the passenger seat) by the non-driver's input/output control unit 31b are simultaneously conducted by a single liquid crystal panel 6.

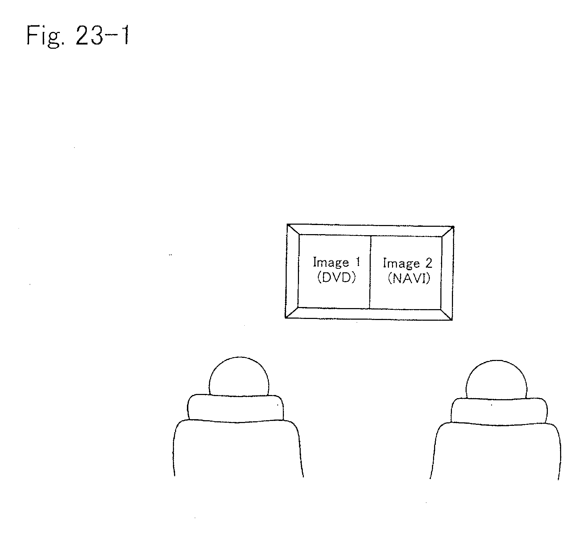

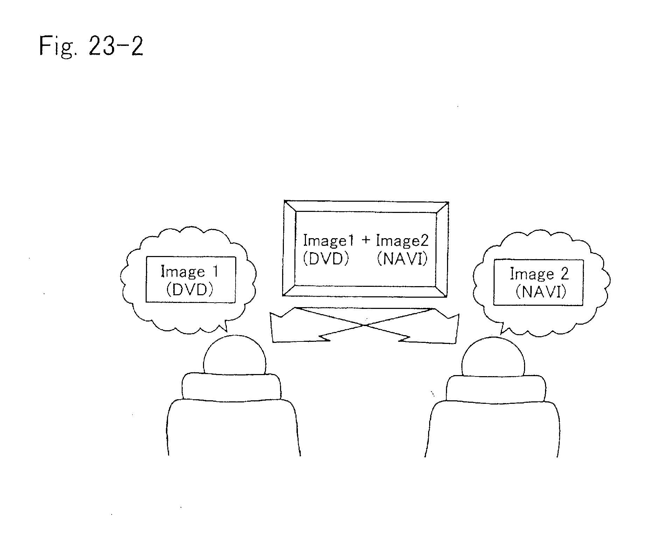

When a screen for the driver (display output for driver) and a screen for the non-driver (display output for non-driver) are simultaneously displayed on the single liquid crystal panel 6, it is desired that a plurality of screens should be displayed in overlying relation with each other by making use of a difference between the directions in which passengers are looking as shown in Fig. 23-2, since the size of each display screen becomes small, if the display screen is divided to display each screen as shown in Fig. 23-1.

Furthermore, if display elements of the liquid crystal panel 6 are divided into the display output for driver and the display output for non-driver, the resolution of each display output is reduced to a half of the whole display.

Therefore, in the on-vehicle device 30, by switching between the display output for driver and the display output for non-driver by time division in all display elements for output and linking this switching timing between the display contents with switching timing of directivity by the liquid crystal shutter 9, the display output for driver and the display output for non-driver are in overlying relation with each other without reducing the resolutions.

Concretely, these display outputs are prepared by the display processor 51. The display processor 51 has a driver's-seat-side display processor 51a, a passenger-seat-side display processor 51b, the liquid crystal shutter control unit 51c, and a luminance correcting unit 51d.

The driver's-seat-side display processor 51a is a processor for preparing a content of display in the driver's seat direction, that is, display to the driver. The passenger-seat-side display processor 51b is a processor for preparing a content of display in the passenger seat direction, that is, display to the non-driver sitting in the passenger seat. Here, it is desired that the display outputs prepared by the driver's-seat-side display processor 51a and the passenger-seat-side display processor 51b should be prepared at about twice the bit rate of a normal display output, resulting in sufficiently smooth display in time-division display.

The liquid crystal shutter control unit 51 is a control unit for controlling the driving operations of the liquid crystal shutter 9. The luminance correcting unit 51d has a function of conducting processing of correcting the luminances of display contents prepared by the driver's-seat-side display processor 51a and the passenger-seat-side display processor 51b. By a correction wherein the smaller the ratio of the visible time of display is, the higher the luminance is made, conducted by the luminance correcting unit 51d, each display output is allowed to have a sufficient luminance in time-division display.

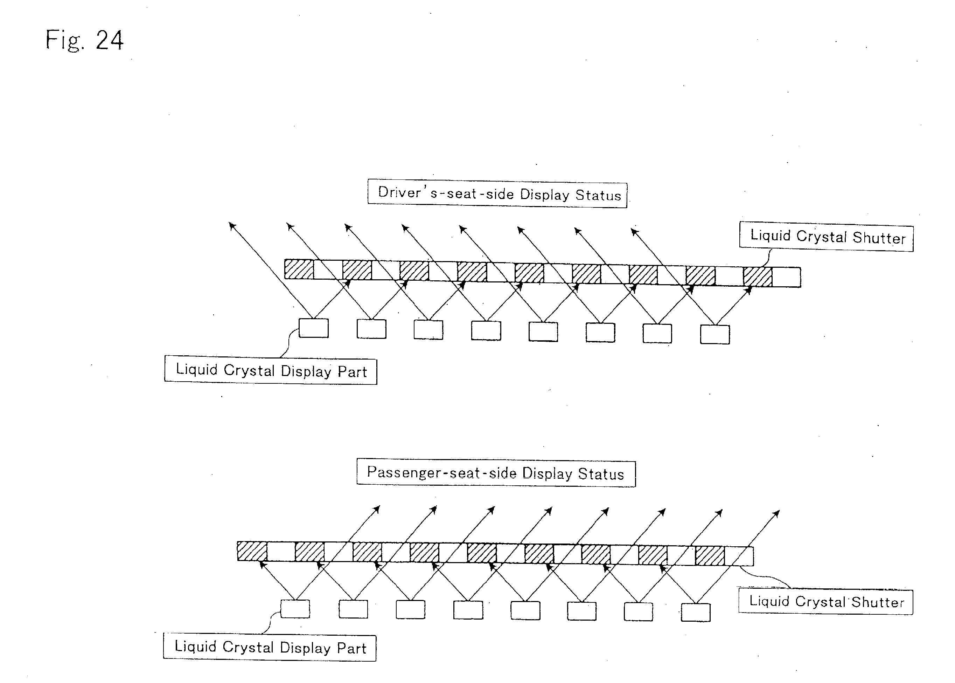

The display method by time-division linkage control performed by the main control unit 31 in the on-vehicle device 30 according to the third embodiment is further described by reference to Fig. 24. As shown in Fig. 24, in the driver's-seat-side display status where display is conducted to the driver's seat side, transmission to the passenger seat side is interrupted by control of the liquid crystal shutter 9 and the liquid crystal display part (display elements) of the liquid crystal panel 6 can be seen only from the driver's seat side.

On the other hand, in the passenger-seat-side display status where display is conducted to the passenger seat side, transmission to the driver's seat side is interrupted by control of the liquid crystal shutter 9 and the liquid crystal display part of the liquid crystal panel 6 can be seen only from the passenger seat side.

Since the on-vehicle device 30 switches between the driver's-seat-side display status and the passenger-seat-side display status shown in Fig. 24 by time division to conduct individual display outputs in different directions (i.e. a driver's seat direction and a passenger seat direction), in either of the driver's-seat-side display status and the passenger-seat-side display status, each display content is output by using all of the liquid crystal display part (display elements) in such a manner as not to reduce the resolution thereof (i.e. the number of effective pixels).

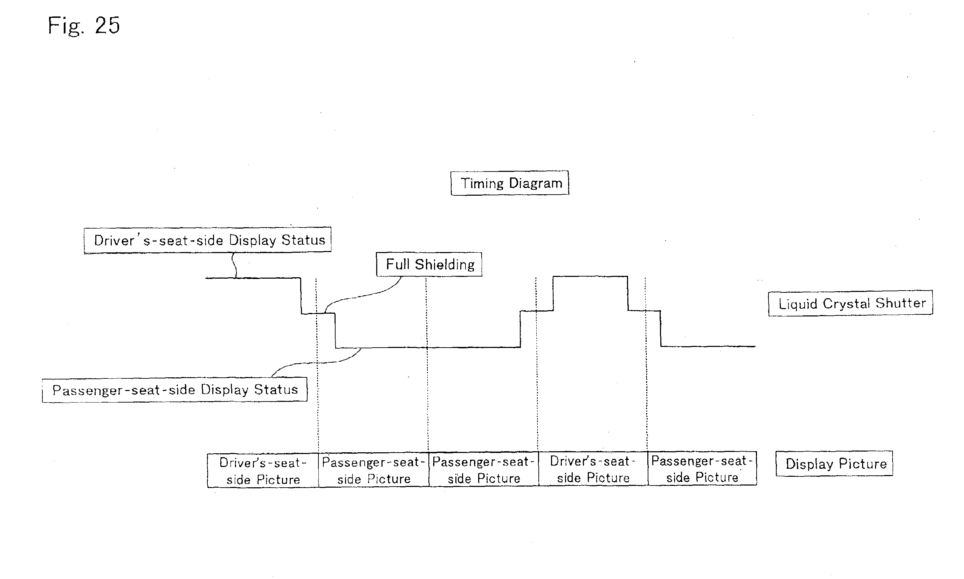

Furthermore, a full interrupting time period during which the liquid crystal shutter 9 is completely closed (i.e. light is transmitted neither to the driver's seat side nor to the passenger seat side) as shown by a timing diagram of Fig. 25 is set at a point in time of switching between the driver's-seat-side display status and the passenger-seat-side display status, and before and after the point in time. Thus, by setting the full interrupting time period at the time of switching between the driver's-seat-side display status and the passenger-seat-side display status, it is possible to prevent mixture of the display output for driver and the display output for non-driver, that is, an occurrence of time crosstalk.

In addition, the switching density between the driver's-seat-side display status and the passenger-seat-side display status, that is, the proportion of the display time between the display output for driver and the display output for non-driver is not necessarily 1:1. It is desired that the proportion should be changed as needed.

For example, when it is judged that the vehicle is running from outputs from the speed sensor 42, the transmission state detector 43, and the brake state detector 44, it is desired that the density of the passenger-seat-side display status is made higher as shown in Fig. 25 (the proportion between the driver's-seat-side display status and the passenger-seat-side display status is 1:2 in Fig. 25). This is because it is considered that during the vehicle's running, that is, during the driver's driving, the driver does not stare at the liquid crystal panel 6, while the passenger in the passenger seat watches a DVD reproduction output.

When a guidance output to the driver is conducted by the navigation unit 32, it is necessary to instantly and certainly convey information to the driver, and therefore, control of increasing the density of the driver's-seat-side display status is conducted.

When the switching density between the driver's-seat-side display status and the passenger-seat-side display status is changed, there is no need to say that it is desirable to vary a correction value by the luminance correcting unit 51d responding to the switching density. In other words, the smaller (shorter) the switching density (visible time proportion) is, the higher the luminance is made by a correction.

When no passenger is present in the passenger seat, or when the display output for driver and the display output for non-driver are identical, there is no need to conduct different display outputs in any directions, and therefore, a single display output is conducted on the liquid crystal panel 6, and the liquid crystal shutter 9 is controlled to be completely opened at all times.

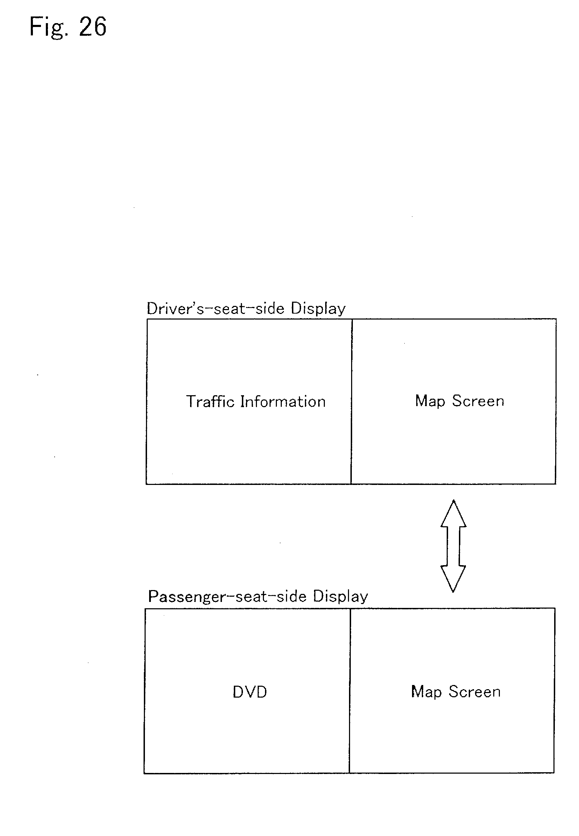

When the display content of the display output for driver and the display content of the display output for non-driver contain a common content, for example, as shown in Fig. 26, when a map screen and traffic information are displayed to the driver's seat side and a map screen and a DVD screen are displayed to the passenger seat side, the display screen is prepared in such a manner as to display the common content (the map screen in Fig. 26) in the same region on the liquid crystal panel 6 (a right half of the screen in Fig. 26). Thus, by displaying a content commonly displayed in a plurality of directions in the same region on the display, it is possible to restrict an occurrence of time crosstalk.

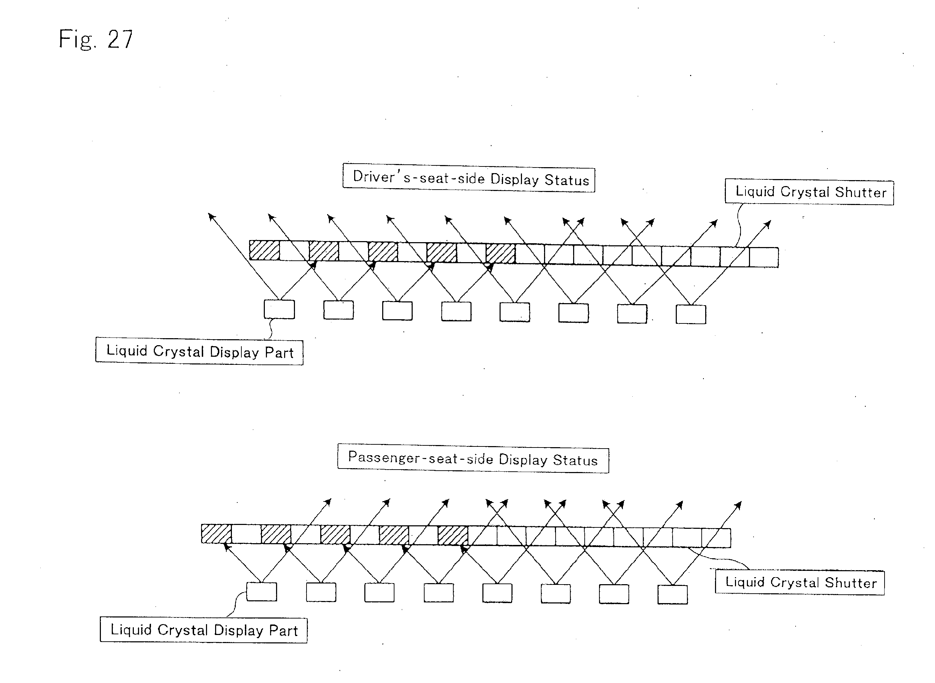

Furthermore, at this time, a portion of the liquid crystal shutter 9 corresponding to the region in which the common content is displayed may be controlled to be opened at all times as shown in Fig. 27. If the liquid crystal shutter 9 covering the region in which the common content is displayed is opened at all times, it is possible to easily improve the quality of picture in the region.

When the on-vehicle device 30 wherein the display device according to the third embodiment is adopted is used, each display output prepared by the driver's input/output control unit 31a and the non-driver's input/output control unit 31b is switched by time division by the time-division linkage control unit 31c for output, and the switching timing between the display contents and switching timing of directivity by the liquid crystal shutter 9 are controlled to be linked to, that is, synchronized with each other. Therefore, it is possible to conduct different display outputs by overlaying them to the driver side and to the non-driver side without reducing the resolutions. Here, it is also possible to realize the same function not by the liquid crystal shutter 9 but by a construction wherein shielding places of light are electrically or mechanically changeable.

An on-vehicle device wherein a display device according to a fourth embodiment is adopted is described below. Here, the construction of the on-vehicle device 30A wherein the display device according to the fourth embodiment is adopted is almost similar to that of the on-vehicle device 30 shown in Fig. 22, except a main control unit 31A and a display processor 51A. Therefore, the main control unit 31A and the display processor 51A having different functions are differently marked, and other components having the same functions are similarly marked and are not described below.

By using the on-vehicle device 30 according to the third embodiment, the time-division linkage control unit 31c switches between the display output for driver and the display output for non-driver by time division in all display elements for output, and the switching timing of each display output and the switching timing of directivity by the liquid crystal shutter 9 are linked to each other. However, by using the on-vehicle device 30A according to the fourth embodiment, a time-division linkage control unit 31c switches between output patterns including a display output for driver and a display output for non-driver by time division for output on a common screen, and the switching timing between the output patterns and switching timing of directivity by the liquid crystal shutter 9 are linked to each other. That point is different from the on-vehicle device 30 according to the third embodiment.

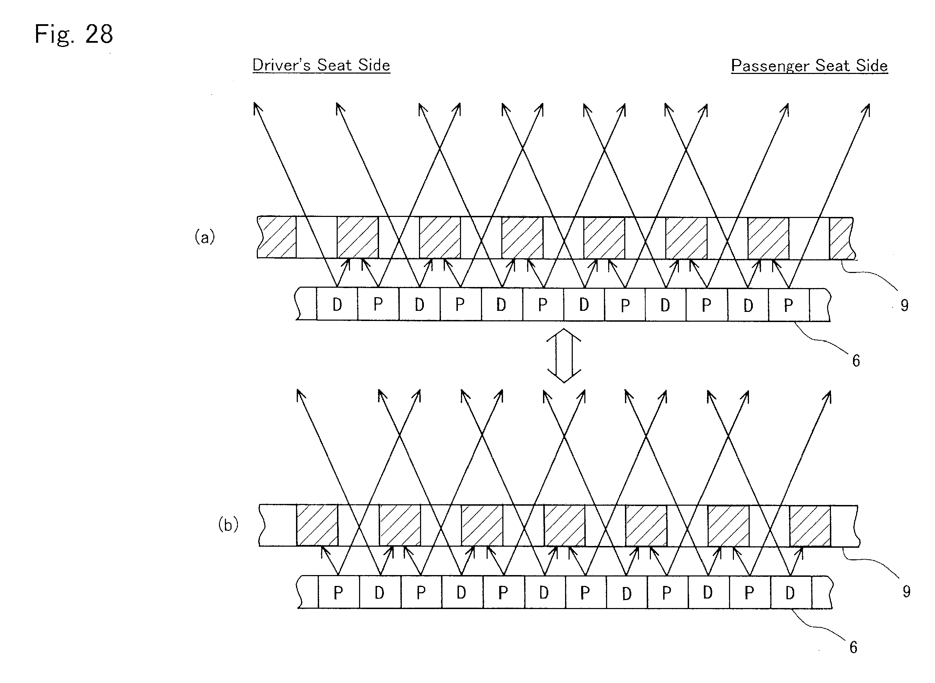

Fig. 28 is an illustration to describe a display method by time-division linkage control performed by the main control unit 31A in the on-vehicle device 30A according to the fourth embodiment. In a first display status shown in Fig. 28(a), to each pixel line of a screen constituting a liquid crystal panel 6, driver's-seat-side picture signals D and passenger-seat-side picture signals P are alternately output (an alternate output pattern). On the other hand, each pixel line constituting the liquid crystal shutter 9 is controlled to be in a shielding pattern whereby separate display to the driver's seat side and the passenger seat side corresponding to the alternate output pattern is conducted, that is, the shielding pattern whereby display to the right (passenger seat) with the driver's-seat-side picture signals D is interrupted and display to the left (driver's seat) therewith can be seen, while display to the left (driver's seat) with the passenger-seat-side picture signals P is interrupted and display to the right (passenger seat) therewith can be seen.

In a second display status shown in Fig. 28(b) following the first display status, to each pixel line of the liquid crystal panel 6 to which the driver's-seat-side picture signal D was output in the first display status, the passenger-seat-side picture signal P is output, while to each pixel line of the liquid crystal panel 6 to which the passenger-seat-side picture signal P was output, the driver's-seat-side picture signal D is output. Furthermore, the liquid crystal shutter 9 is controlled to be in a shielding pattern whereby separate display to the driver's seat side and the passenger seat side is conducted, that is, the shielding pattern whereby display to the right (passenger seat) with the driver's-seat-side picture signals D is interrupted and display to the left (driver's seat) therewith can be seen, while display to the left (driver's seat) with the passenger-seat-side picture signals P is interrupted and display to the right (passenger seat) therewith can be seen with linking to switching between the display contents to each pixel line of the liquid crystal panel 6.

By repeating the first display status shown in Fig. 28(a) and the second display status shown in Fig. 28(b) (e.g. the number of output frames per unit time is preferably two times or more than the conventional number thereof), the picture in the first display status and the picture in the second display status are temporally in overlying relation with each other. And by an after image effect thereof, it is possible to allow the driver to see the content of the display output for driver and to allow the non-driver (passenger in the passenger seat) to see the content of the display output for non-driver without reducing the resolutions (i.e. the number of effective pixels).

Here, a full interrupting time period during which the liquid crystal shutter 9 is completely closed (light is transmitted neither to the driver's seat side nor to the passenger seat side) is preferably set at a point in time when the first display status and the second display status are switched, and before and after the point in time.

When the on-vehicle; device 30A according to the fourth embodiment is used, the time-division linkage control unit 31c switches between the output patterns including the display content in the driver's seat direction and the display content in the passenger seat direction by time division for output, and the switching timing between the output patterns and the switching timing of directivity by the liquid crystal shutter 9 (a shielding pattern for separate display) are linked to each other. Therefore, even if the display content in the driver's seat direction and the display content in the passenger seat direction are simultaneously output on a screen in alternate output patterns, by linking, that is, synchronizing the switching timing between the output patterns with the switching timing of directivity by the liquid crystal shutter 9, the display content in the driver's seat direction and the display content in the passenger seat direction are temporally mixed with each other and it is possible to obtain pictures without reduced resolutions. By taking advantage of an after image phenomenon, a display device which conducts different display outputs in a plurality of directions without reducing resolutions can be obtained.

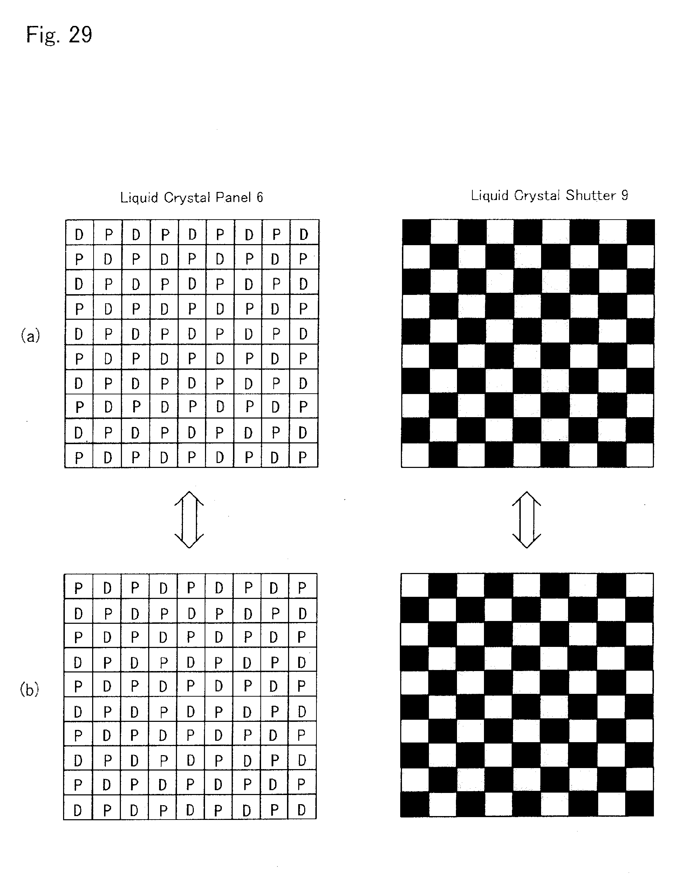

In the fourth embodiment, a case where the shielding pattern of the liquid crystal shutter 9 is controlled to be switched in a vertical-stripe pattern (here, the output pattern of the liquid crystal panel 6 is also switched in a vertical-stripe pattern) was assumed for description. However, the shielding pattern of the liquid crystal shutter 9 and the output pattern of the liquid crystal panel 6 are not limited to the vertical-stripe patterns. Fig. 29 is an illustration to describe a shielding pattern of a liquid crystal shutter 9 in an on-vehicle device according to another embodiment. Fig. 29(a) schematically shows an output pattern of a liquid crystal panel 6 and a driving pattern of the liquid crystal shutter 9 at first timing, and Fig. 29(b) schematically shows an output pattern of the liquid crystal panel 6 and a driving pattern of the liquid crystal shutter 9 at second timing. Here, the liquid crystal shutter 9 is arranged in such a manner as to be shifted by a half dot from the liquid crystal panel 6.

Fig. 29 shows a case where each pixel constituting the liquid crystal shutter 9 is driven to be in a grid-like (staggered grid) shielding pattern. Grid-like output patterns including driver's-seat-side picture signals D and passenger-seat-side picture signals P to the liquid crystal panel 6 are switched by time division for output, and the switching timing between the grid-like output patterns and switching timing between grid-like shielding patterns by the liquid crystal shutter 9 are linked together, that is, synchronized with each other. By repeating the first timing shown in Fig. 29(a) and the second timing shown in Fig. 29(b) (e.g. the number of output frames per unit time is preferably two times or more than the conventional number thereof), the picture at the first timing and the picture at the second timing are temporally in overlying relation with each other. And by an after image effect thereof, it is possible to allow the driver to see the content of the display output for driver and to allow the non-driver (passenger in the passenger seat) to see the content of the display output for non-driver without reducing the resolutions. By such construction, each of the picture to the driver's seat side and the picture to the passenger seat side can be displayed more clearly.

In the fourth embodiment, a case where the proportion between the number of pixels (pixel size) of the liquid crystal panel 6 and the number of pixels (pixel size) of the liquid crystal shutter 9 is 1:1 was described. However, the proportion of the number of pixels (pixel size) of the liquid crystal shutter 9 to the number of pixels (pixel size) of the liquid crystal panel 6 may be enhanced (e.g. 2 or more:1). By such construction, various shielding patterns are available, and therefore, adjustments of viewing angles with high accuracy and the like can be conducted.

In the first to fourth embodiments, cases where a display control device, a display device, and a display method according to the present invention are applied to an on-vehicle display device were described. However, a display control device, a display device, and a display method according to the present invention can be applied not only to display devices for use on vehicle but also to display devices for home use and the like.

### Industrial Applicability

As described above, a display control device, a display device, and a display method according to the present invention are useful for display outputs on a display unit which can display individual images in a plurality of directions on a common screen, and especially suitable for improvements in operability and resolution when an individual image is output for display in each direction.

## Claims

1. A display control device for controlling a display unit which can display individual images in a plurality of viewing directions on a common screen, comprising:
a display control unit for conducting switching control of a display image in a prescribed direction of the plurality of viewing directions based on a predetermined display switching condition.

2. A display control device according to Claim 1, comprising:
a switched direction judging unit for judging in which direction of the plurality of viewing directions a display image was switched; and
a switching condition judging unit for judging whether the display switching condition is related to the switched direction judged by the switched direction judging unit or not,
wherein the display control unit conducts control of switching the display image in the prescribed direction to the same display image as the display image in the switched direction when it is judged that the display switching condition is related to the switched direction by the switching condition judging unit.

3. A display device, comprising:
a display unit which can display individual images in a plurality of viewing directions on a common screen; and
a display control unit for controlling the display unit,
wherein the display control unit conducts switching control of a display image in a prescribed direction of the plurality of viewing directions based on a predetermined display switching condition.

4. A display control device for controlling a display unit which can display individual images in a plurality of viewing directions on a common screen,
wherein the display unit comprises a light transmission area changing unit for changing a light transmission area in each viewing direction,
the display control device, comprising a display control unit which brings a change of a light transmission area in each viewing direction by the light transmission area changing unit into correspondence with a display resolution of an image displayed in the each viewing direction for control.

5. A display control device according to Claim 4, comprising:
an image type determining unit for determining types of images displayed on the display unit,
wherein the display control unit brings a change of the light transmission area in the each viewing direction by the light transmission area changing unit into correspondence with the display resolution of the image displayed in the each viewing direction for control based on the types of images determined by the image type determining unit.

6. A display control device according to Claim 4,
wherein the light transmission area changing unit comprises a liquid crystal shutter,
the display control device, comprising a shielding pattern storage unit in which shielding patterns of the liquid crystal shutter are stored,
wherein the display control unit reads a shielding pattern corresponding to a changing condition of the light transmission area from the shielding pattern storage unit and controls the liquid crystal shutter based on the shielding pattern.

7. A display device, comprising:
a display unit which can display individual images in a plurality of viewing directions on a common screen, the display unit having a light transmission area changing unit for changing a light transmission area in each viewing direction; and
a display control unit which brings a change of a light transmission area in each viewing direction by the light transmission area changing unit into correspondence with a display resolution of an image displayed in the each viewing direction for control.

8. A display device, comprising:
a first display content preparing unit for preparing a display content in a first direction;
a second display content preparing unit for preparing a display content in a second direction;
a directivity control unit for controlling directivities of display outputs; and
a time-division linkage control unit which switches between a first display content prepared by the first display content preparing unit and a second display content prepared by the second display content preparing unit by time division to output to each display element, and links switching timing between the display contents with switching timing of directivity by the directivity control unit.

9. A display device according to Claim 8,
wherein the time-division linkage control unit switches between the first display content and the second display content by time division in all display elements for output.

10. A display device according to Claim 8,
wherein the time-division linkage control unit switches between output patterns including the first display content and the second display content by time division for output, and links switching timing between the output patterns with the switching timing of directivity by the directivity control unit.

11. A display device according to Claim 8,
wherein the time-division linkage control unit sets a full-interrupting time period during which both transmission in the first direction and transmission in the second direction are interrupted at a point in time when the directivity is switched by the directivity control unit, and before and after the point in time.

12. A display device according to Claim 11,
wherein the time-division linkage control unit completely opens the liquid crystal shutter at all times when the first display content and the second display content are identical.

13. A display device, comprising:
a first composite picture producing unit for producing a first composite picture from a first specific pixel group on a first picture with a second exclusive pixel group in an exclusive position from the first specific pixel group on a second picture;
a second composite picture producing unit for producing a second composite picture from a second specific pixel group in the same position as the first specific pixel group on the second picture with a first exclusive pixel group in an exclusive position from the second specific pixel group on the first picture;
a directivity control unit for switching control between a directivity of each pixel located in the first specific pixel group and a directivity of each pixel located in the second specific pixel group; and
a time-division linkage control unit which switches between the first composite picture and the second composite picture by time division for display, and links switching timing between the directivities by the directivity control unit to the switching.

14. A display method, comprising the steps of:
time-division display wherein a plurality of pictures are displayed by time division on each display element; and
time-division interruption wherein directivities are added to display outputs by time-division interruption of an emission of picture light in a prescribed direction with linking to the time-division display, and the plurality of pictures are output in different directions.

15. A display method, comprising the steps of:
producing a first composite picture wherein a first composite picture is produced from a first specific pixel group on a first picture with a second exclusive pixel group in an exclusive position from the first specific pixel group on a second picture;
producing a second composite picture wherein a second composite picture is produced from a second specific pixel group in the same position as the first specific pixel group on the second picture with a first exclusive pixel group in an exclusive position from the second specific pixel group on the first picture; and
time-division switching wherein the first composite picture and the second composite picture are switched by time division to be displayed, and a directivity of each pixel located in the first specific pixel group and a directivity of each pixel located in the second specific pixel group in display outputs are switched with linking to the switching.
